# EUROPEAN PATENT APPLICATION

(11) **EP 4 597 776 A2**
(43) Date of publication of application: **06.08.2025**
(21) Application number: 25150874.3
(22) Date of filing: 09.01.2025
(51) Int. Cl.: H02J 3/32, H02J 3/38, H02J 9/06

(54) **BACKUP POWER BOX AND CONTROL METHOD FOR BACKUP POWER BOX**

(30) Priority: 12.01.2024 CN 202410048286
(71) Applicant: Huawei Digital Power Technologies Co., Ltd., Shenzhen, Guangdong 518043 (CN)
(72) Inventor: HE, Yuan, Shenzhen 518043 (CN); WANG, Le, Shenzhen 518043 (CN)
(74) Representative: Isarpatent

(57) **Abstract**

This application provides a backup power box and a control method for the backup power box. The backup power box includes a plurality of backup power ports, a multiphase wire, a plurality of relays, a first switch circuit, and a controller. The first switch circuit includes a first switching transistor, a first voltage source, a first on-resistor, and a self-locking circuit. The first switching transistor is connected between the first voltage source and a coil of one relay of the plurality of relays, two ends of the first on-resistor are respectively connected to the first voltage source and an output end of the self-locking circuit, and the output end of the self-locking circuit is further connected to the first switching transistor. The controller is configured to control the self-locking circuit to output a control signal, to control the first switching transistor to switch to a turn-on state. The self-locking circuit is configured to: when the first switching transistor is in the turn-on state and the controller is incapable of controlling the self-locking circuit to output the control signal, continuously output the control signal to maintain the first switching transistor in the turn-on state. In this application, a load at a backup power port is not powered off in an upgrade process of the backup power box.

## Description

### TECHNICAL FIELD

This application relates to the electric power field, and in particular, to a backup power box and a control method for the backup power box.

### BACKGROUND

With development of electric power technologies, a backup power box is disposed between an inverter and a power grid. A main function of the backup power box is as follows: When the power grid is faulty, the backup power box may receive electric energy to supply power to a load. For example, when a photovoltaic module and the inverter are in an off-grid mode, that is, the photovoltaic module and the inverter are disconnected from the power grid, the backup power box may still provide electric energy for the load by using an alternating current obtained through conversion performed by the inverter. In this way, even if the photovoltaic module and the inverter are in the off-grid mode, the backup power box may still normally supply power to the load.

Especially in emergencies, it needs to be ensured that the backup power box can normally supply power to the load. However, when the backup power box cannot work normally, for example, when the backup power box needs to be upgraded, the backup power box cannot supply power to the load. Consequently, reliable running of the load cannot be ensured.

### SUMMARY

This application provides a backup power box and a control method for the backup power box, so that a load at a backup power port is not powered off in an upgrade process of the backup power box, to ensure reliable running of the load.

According to a first aspect, a backup power box is provided. The backup power box includes a plurality of backup power ports, a multiphase wire, a plurality of relays, a first switch circuit, and a controller. Two ends of each phase wire of the multiphase wire are respectively configured to connect to an inverter and a power grid. Each of the plurality of backup power ports is connected to each phase wire via a connection point, and each of the plurality of relays is connected between each connection point and the power grid. The first switch circuit includes a first switching transistor, a first voltage source, a first on-resistor, and a self-locking circuit. The first switching transistor is connected between the first voltage source and a coil of one relay of the plurality of relays, two ends of the first on-resistor are respectively connected to the first voltage source and an output end of the self-locking circuit, and the output end of the self-locking circuit is further connected to the first switching transistor. The controller is configured to control the self-locking circuit to output a control signal, to control the first switching transistor to switch to a turn-on state. The self-locking circuit is configured to: when the first switching transistor is in the turn-on state and the controller is incapable of controlling the self-locking circuit to output the control signal, continuously output the control signal to maintain the first switching transistor in the turn-on state.

In this embodiment of this application, the controller controls the self-locking circuit to output the control signal, to control the first switching transistor to switch to the turn-on state. In this way, the first switching transistor is turned on, and a loop in which the first voltage source supplies power to the coil of the relay is conducted. A current passes through the coil, which generates electromagnetic effect. An armature overcomes anti-spring pulling force and is attracted to an iron core under attraction of electromagnetic force, to drive a movable contact and a static contact of the armature to attract to each other. In this way, the relay is switched on, and electric energy is transmitted via a wire. When the controller is incapable of controlling the self-locking circuit to output the control signal, the self-locking circuit may still continuously output the control signal to maintain the turn-on state of the first switching transistor, and the relay is always in an on state. Therefore, electric energy can be continuously transmitted via the multiphase wire. Particularly, when the controller is incapable of controlling the self-locking circuit to output the control signal, for example, when the backup power box is being upgraded, the self-locking circuit may still continuously output the control signal to maintain the turn-on state of the first switching transistor, and the relay is always in the on state. Therefore, in an upgrade process of the backup power box, the backup power box continuously supplies power to a load through a backup power port, so that the load at the backup power port is not powered off in the upgrade process of the backup power box, to ensure reliable running of the load.

With reference to the first aspect, in a possible implementation, the self-locking circuit includes a second switching transistor, a third switching transistor, a fourth switching transistor, a second voltage source, a diode, a first drive circuit, a second on-resistor, and a self-locking resistor. An anode of the diode is connected to the first drive circuit, a cathode of the diode is connected to a base of the second switching transistor, an emitter of the second switching transistor is connected to an emitter of the fourth switching transistor, a collector of the second switching transistor is connected to a base of the third switching transistor, one end of the self-locking resistor is connected to a connection point between the cathode of the diode and the base of the second switching transistor, and the other end of the self-locking resistor is connected to a connection point between the emitter of the second switching transistor and the emitter of the fourth switching transistor. An emitter of the third switching transistor is connected to the second voltage source, a collector of the third switching transistor is connected to a base of the fourth switching transistor, a collector of the fourth switching transistor is configured to connect to a base of the first switching transistor, one end of the second on-resistor is connected to a connection point between the second voltage source and the emitter of the third switching transistor, and the other end of the second on-resistor is connected to a connection point between the base of the third switching transistor and the collector of the second switching transistor.

In this embodiment of this application, when the first drive circuit outputs a high-level signal, and the high-level signal output by the first drive circuit enables a voltage between the base and the emitter of the second switching transistor to be greater than a turn-on voltage of the second switching transistor, the second switching transistor is turned on. When the second switching transistor is turned on, a loop passing from the second voltage source through the second on-resistor and the second switching transistor is conducted. Therefore, a current flows through the second on-resistor, and there is a voltage difference between the two ends of the second on-resistor. When the voltage difference is greater than a turn-on voltage of the third switching transistor, the third switching transistor is turned on. That the third switching transistor is turned on is equivalent to that the base of the fourth switching transistor is connected to the second voltage source. In this way, the fourth switching transistor is turned on. When the fourth switching transistor is turned on, and a loop passing from the first voltage source through the first on-resistor and the fourth switching transistor is conducted, a current flows through the first on-resistor, and there is a voltage difference between two ends of the first on-resistor. When the voltage difference between the two ends of the first on-resistor is greater than a turn-on voltage of the first switching transistor, the first switching transistor is turned on. In addition, when the third switching transistor is turned on, a loop passing from the second voltage source through the third switching transistor and the self-locking resistor is conducted. That is, a current flows through the self-locking resistor, and there is a voltage difference between two ends of the self-locking resistor. When the voltage difference between the two ends of the self-locking resistor is greater than the turn-on voltage of the second switching transistor, the second switching transistor is continuously in a turn-on state. This can provide a condition for continuously turning on the third switching transistor. When the first drive circuit temporarily cannot output a high-level signal or cannot output a signal, for example, the backup power box needs to be upgraded, because a self-locking circuit is designed, the self-locking circuit may maintain a turn-on state of the first switching transistor. Therefore, in an upgrade process of the backup power box, a load at a backup power port is not powered off, to ensure reliable running of the load.

With reference to the first aspect, in a possible implementation, the self-locking circuit includes a second switching transistor, a third switching transistor, a fourth switching transistor, a second voltage source, a diode, a first drive circuit, a second on-resistor, and a self-locking resistor. The first drive circuit is connected to a gate of the second switching transistor via the diode, a source of the second switching transistor is connected to a source of the fourth switching transistor, a drain of the second switching transistor is connected to a gate of the third switching transistor, one end of the self-locking resistor is connected to a connection point between a cathode of the diode and the gate of the second switching transistor, and the other end of the self-locking resistor is connected to a connection point between the source of the second switching transistor and the source of the fourth switching transistor. A source of the third switching transistor is connected to the second voltage source, a drain of the third switching transistor is connected to a gate of the fourth switching transistor, a drain of the fourth switching transistor is configured to connect to a gate of the first switching transistor, one end of the second on-resistor is connected to a connection point between the second voltage source and the source of the third switching transistor, and the other end of the second on-resistor is connected to a connection point between the gate of the third switching transistor and the drain of the second switching transistor.

In this embodiment of this application, when the first drive circuit outputs a high-level signal, and the high-level signal output by the first drive circuit enables a voltage between the base and the source of the second switching transistor to be greater than a turn-on voltage of the second switching transistor, the second switching transistor is turned on. When the second switching transistor is turned on, a loop passing from the second voltage source through the second on-resistor and the second switching transistor is conducted. Therefore, a current flows through the second on-resistor, and there is a voltage difference between the two ends of the second on-resistor. When the voltage difference is greater than a turn-on voltage of the third switching transistor, the third switching transistor is turned on. That the third switching transistor is turned on is equivalent to that the base of the fourth switching transistor is connected to the second voltage source. In this way, the fourth switching transistor is turned on. When the fourth switching transistor is turned on, and a loop passing from the first voltage source through the first on-resistor and the fourth switching transistor is conducted, a current flows through the first on-resistor, and there is a voltage difference between two ends of the first on-resistor. When the voltage difference between the two ends of the first on-resistor is greater than a turn-on voltage of the first switching transistor, the first switching transistor is turned on. In addition, when the third switching transistor is turned on, a loop passing from the second voltage source through the third switching transistor and the self-locking resistor is conducted. That is, a current flows through the self-locking resistor, and there is a voltage difference between two ends of the self-locking resistor. When the voltage difference between the two ends of the self-locking resistor is greater than the turn-on voltage of the second switching transistor, the second switching transistor is continuously in a turn-on state. This can provide a condition for continuously turning on the third switching transistor. When the first drive circuit temporarily cannot output a high-level signal or cannot output a signal, for example, the backup power box needs to be upgraded, because a self-locking circuit is designed, the self-locking circuit may maintain a turn-on state of the first switching transistor. Therefore, in an upgrade process of the backup power box, a load at a backup power port is not powered off, to ensure reliable running of the load.

With reference to the first aspect, in a possible implementation, the self-locking circuit includes a second switching transistor, a third switching transistor, a fourth switching transistor, a second voltage source, a diode, a first drive circuit, a second on-resistor, and a self-locking resistor. The first drive circuit is connected to a gate of the second switching transistor via the diode, an emitter of the second switching transistor is connected to an emitter of the fourth switching transistor, a collector of the second switching transistor is connected to a gate of the third switching transistor, one end of the self-locking resistor is connected to a connection point between a cathode of the diode and the gate of the second switching transistor, and the other end of the self-locking resistor is connected to a connection point between the emitter of the second switching transistor and the emitter of the fourth switching transistor. An emitter of the third switching transistor is connected to the second voltage source, a collector of the third switching transistor is connected to a gate of the fourth switching transistor, a collector of the fourth switching transistor is configured to connect to a gate of the first switching transistor, one end of the second on-resistor is connected to a connection point between the second voltage source and the emitter of the third switching transistor, and the other end of the second on-resistor is connected to a connection point between the gate of the third switching transistor and the collector of the second switching transistor.

In this embodiment of this application, when the first drive circuit outputs a high-level signal, and the high-level signal output by the first drive circuit enables a voltage between the gate and the emitter of the second switching transistor to be greater than a turn-on voltage of the second switching transistor, the second switching transistor is turned on. When the second switching transistor is turned on, a loop passing from the second voltage source through the second on-resistor and the second switching transistor is conducted. Therefore, a current flows through the second on-resistor, and there is a voltage difference between the two ends of the second on-resistor. When the voltage difference is greater than a turn-on voltage of the third switching transistor, the third switching transistor is turned on. That the third switching transistor is turned on is equivalent to that the gate of the fourth switching transistor is connected to the second voltage source. In this way, the fourth switching transistor is turned on. When the fourth switching transistor is turned on, and a loop passing from the first voltage source through the first on-resistor and the fourth switching transistor is conducted, a current flows through the first on-resistor, and there is a voltage difference between two ends of the first on-resistor. When the voltage difference between the two ends of the first on-resistor is greater than a turn-on voltage of the first switching transistor, the first switching transistor is turned on. In addition, when the third switching transistor is turned on, a loop passing from the second voltage source through the third switching transistor and the self-locking resistor is conducted. That is, a current flows through the self-locking resistor, and there is a voltage difference between two ends of the self-locking resistor. When the voltage difference between the two ends of the self-locking resistor is greater than the turn-on voltage of the second switching transistor, the second switching transistor is continuously in a turn-on state. This can provide a condition for continuously turning on the third switching transistor. When the first drive circuit temporarily cannot output a high-level signal or cannot output a signal, for example, the backup power box needs to be upgraded, because a self-locking circuit is designed, the self-locking circuit may maintain a turn-on state of the first switching transistor. Therefore, in an upgrade process of the backup power box, a load at a backup power port is not powered off, to ensure reliable running of the load.

With reference to the first aspect, in a possible implementation, when the controller receives an on-grid instruction, the controller is configured to control the first drive circuit to generate a single pulse signal, to trigger the self-locking circuit to output the control signal, to switch the first switching transistor to be in the turn-on state.

In this embodiment of this application, when the controller receives the on-grid instruction, the controller controls the first drive circuit to generate the single pulse signal, to trigger the self-locking circuit to output the control signal, to switch the first switching transistor to be in the turn-on state. As long as the first switching transistor is in the turn-on state, the self-locking circuit may continuously output the control signal to maintain the turn-on state of the first switching transistor, and the relay is always in an on state. In this way, electric energy may be continuously transmitted via the multiphase wire. Therefore, in an upgrade process of the backup power box, the backup power box continuously supplies power to a load through a backup power port, so that the load at the backup power port is not powered off in the upgrade process of the backup power box, to ensure reliable running of the load.

With reference to the first aspect, in a possible implementation, the self-locking circuit further includes a fifth switching transistor and a second drive circuit. The second drive circuit is connected to a base of the fifth switching transistor, an emitter of the fifth switching transistor is connected to a connection point between the second switching transistor and the fourth switching transistor, and a collector of the fifth switching transistor is connected to a connection point between the second voltage source and the third switching transistor. The controller is configured to control the self-locking circuit not to output the control signal, to control the first switching transistor to switch to a turn-off state. The self-locking circuit is configured to: when the first switching transistor is in the turn-off state and the controller is incapable of controlling the self-locking circuit not to output the control signal, continuously skip outputting the control signal to maintain the turn-off state of the first switching transistor.

In this embodiment of this application, when the fifth switching transistor is turned on, and a voltage at a connection point between the fifth switching transistor and the second voltage source is pulled down, that is, a voltage at the emitter of the third switching transistor decreases, the voltage at the emitter of the third switching transistor is less than a voltage at the base of the third switching transistor, and the third switching transistor is turned off. Because the third switching transistor is turned off, the second voltage source cannot pass through the third switching transistor, and there is no voltage difference between the base and the emitter of the fourth switching transistor. In this way, the fourth switching transistor is turned off. When the fourth switching transistor is turned off, a voltage output by the first voltage source cannot pass through the first on-resistor and the fourth switching transistor/the first voltage source cannot form a loop with the first on-resistor and the fourth switching transistor, no current flows through the first on-resistor, and there is no voltage difference between the two ends of the first on-resistor, that is, there is no voltage difference between the base and the emitter of the first switching transistor. Therefore, the first switching transistor is turned off. Therefore, if a loop passing from the first voltage source through the first switching transistor and a coil of a relay is disconnected, no current flows through the coil of the relay, a contact of the relay is open, and the relay is disconnected from the power grid. When the controller is incapable of controlling the self-locking circuit not to output the control signal, a function of the self-locking circuit is to maintain the turn-off state of the first switching transistor, so that the relay is always in an off state. This can ensure that the inverter is disconnected from the power grid, and ensure reliable disconnection from the power grid in an off-grid mode.

With reference to the first aspect, in a possible implementation, when the controller receives an off-grid instruction, the controller is configured to control the second drive circuit to generate a single pulse signal, to trigger the self-locking circuit not to output the control signal, to switch the first switching transistor to the turn-off state.

In this embodiment of this application, when the controller receives the off-grid instruction, the controller controls the second drive circuit to generate the single pulse signal, to trigger the self-locking circuit not to output the control signal, to switch the first switching transistor to the turn-off state. As long as the first switching transistor is in the turn-off state, the self-locking circuit may continuously not output the control signal to maintain the turn-off state of the first switching transistor, and the relay is always in an off state. That the relay is always in the off state can ensure that the inverter is disconnected from the power grid, and ensure reliable disconnection from the power grid in an off-grid mode.

With reference to the first aspect, in a possible implementation, the backup power box further includes a second switch circuit, and the first switch circuit, the second switch circuit, and the one relay are connected in series between the first voltage source and a reference ground.

In this embodiment of this application, the first switch circuit, the second switch circuit, and the one relay are connected in series between the first voltage source and the reference ground. In this design, the relay is switched on only when both a switching transistor that is in the first switch circuit and that is connected in series to the relay and a switching transistor that is in the second switch circuit and that is connected to the relay are turned on. If a switching transistor in one of the switch circuits is turned on by mistake, and a switching transistor in the other switch circuit is turned off, the relay is still not switched on. This can improve safety of a power grid port. In addition, when at least one of the switching transistor that is in the first switch circuit and that is connected in series to the relay and the switching transistor that is in the second switch circuit and that is connected in series to the relay is turned off, the relay is switched off. When the relay needs to be switched off, if one of the switch circuits is faulty, for example, a switching transistor in one switch circuit cannot be turned off, the other switch circuit can be used to ensure that the relay is reliably switched off. This can improve safety of the power grid port.

With reference to the first aspect, in a possible implementation, the second switch circuit includes a sixth switching transistor, a third on-resistor, and the self-locking circuit. The first switching transistor is connected between the first voltage source and one end of the coil of the relay, the other end of the coil of the relay is connected to a collector of the sixth switching transistor, an emitter of the sixth switching transistor is connected to the reference ground, two ends of the third on-resistor are respectively connected to an output end of the self-locking circuit in the second switch circuit and the reference ground, and the output end of the self-locking circuit in the second switch circuit is further connected to a base of the sixth switching transistor.

With reference to the first aspect, in a possible implementation, the second switch circuit includes a sixth switching transistor, a third on-resistor, and the self-locking circuit. The first switching transistor is connected between the first voltage source and a collector of the sixth switching transistor, an emitter of the sixth switching transistor is connected to one end of the coil of the relay, the other end of the coil of the relay is connected to the reference ground, two ends of the third on-resistor are respectively connected to an output end of the self-locking circuit in the second switch circuit and the emitter of the sixth switching transistor, and the output end of the self-locking circuit in the second switch circuit is further connected to a base of the sixth switching transistor.

With reference to the first aspect, in a possible implementation, a current-limiting resistor is further connected in series between the collector of the second switching transistor and a connection point between the second on-resistor and the base of the third switching transistor.

In this embodiment of this application, the current-limiting resistor is further connected in series between the collector of the second switching transistor and the connection point between the second on-resistor and the base of the third switching transistor. Even if a voltage output by the second voltage source is large, because the current-limiting resistor is designed, a resistance value included in a loop in which the second voltage source is connected to the reference ground via the second on-resistor and the current-limiting resistor increases, and a current decreases, so that a current flowing into the collector of the second switching transistor can be reduced. This can avoid damage to the second switching transistor.

With reference to the first aspect, in a possible implementation, a voltage divider resistor is further connected in series between the self-locking resistor and a connection point between the third switching transistor and the fourth switching transistor, and one end of the voltage divider resistor is connected to a connection point between the base of the second switching transistor and the diode.

In this embodiment of this application, the voltage divider resistor is further connected in series between the self-locking resistor and the connection point between the third switching transistor and the fourth switching transistor, and the one end of the voltage divider resistor is connected to the connection point between the base of the second switching transistor and the diode. That the third switching transistor is turned on is equivalent to that a voltage output by the second voltage source is applied to the voltage divider resistor and the self-locking resistor through the third switching transistor. Even if the voltage output by the second voltage source is large, the voltage divider resistor may bear most of the voltage, and a voltage at two ends of the self-locking resistor decreases. This can avoid damage to the second switching transistor.

With reference to the first aspect, in a possible implementation, a current-limiting resistor is further connected in series between the base of the fourth switching transistor and a connection point between the collector of the third switching transistor and the self-locking resistor.

In this embodiment of this application, the current-limiting resistor is further connected in series between the base of the fourth switching transistor and the connection point between the collector of the third switching transistor and the self-locking resistor. Even if a voltage output by the second voltage source is large, because the current-limiting resistor is designed, a resistance value included in a loop in which the second voltage source is connected to the reference ground via the current-limiting resistor increases, and a current decreases, so that a current flowing into the base of the fourth switching transistor can be reduced. This can avoid damage to the fourth switching transistor.

With reference to the first aspect, in a possible implementation, a discharge resistor is further connected between the base of the fourth switching transistor and the emitter of the fourth switching transistor.

In this embodiment of this application, because the discharge resistor is designed, and the base of the fourth switching transistor is connected to the reference ground via the discharge resistor, energy on a parasitic capacitor may be discharged through the discharge resistor. This can reduce impact brought by the parasitic capacitor on a turn-on or turn-off speed of the fourth switching transistor.

With reference to the first aspect, in a possible implementation, a current-limiting resistor is further connected in series between the second drive circuit and the base of the fifth switching transistor.

In this embodiment of this application, the current-limiting resistor is further connected in series between the second drive circuit and the base of the fifth switching transistor. Even if a voltage output by the second drive circuit is large, the current-limiting resistor may increase a resistance value of a loop in which the second drive circuit is connected to the reference ground via the fifth switching transistor, so that a current flowing into the base of the fifth switching transistor can be reduced. This can avoid damage to the fifth switching transistor.

With reference to the first aspect, in a possible implementation, a discharge resistor is further connected between the base of the fifth switching transistor and the emitter of the fifth switching transistor.

In this embodiment of this application, the fifth switching transistor may have a parasitic capacitor, and the parasitic capacitor causes a signal transmission delay. Because the discharge resistor is designed, and the base of the fifth switching transistor is connected to the reference ground via the discharge resistor, energy on the parasitic capacitor may be discharged through the discharge resistor. This can reduce impact brought by the parasitic capacitor on a turn-on or turn-off speed of the fifth switching transistor.

With reference to the first aspect, in a possible implementation, a current-limiting resistor is further connected in series between the second voltage source and a connection point between the fifth switching transistor and the third switching transistor.

In this embodiment of this application, the current-limiting resistor is further connected in series between the second voltage source and the connection point between the fifth switching transistor and the third switching transistor. Even if a voltage output by the second voltage source is large, the current-limiting resistor can increase a resistance value of an entire loop, so that a current flowing into the collector of the fifth switching transistor can be reduced. This can avoid damage to the fifth switching transistor.

According to a second aspect, a control method for a backup power box is provided. The method includes: controlling a self-locking circuit to output a control signal, to control a first switching transistor in a first switch circuit to switch to a turn-on state, where the first switch circuit includes the self-locking circuit, a first on-resistor, and a first voltage source, the first switching transistor is connected between the first voltage source and a relay, two ends of the first on-resistor are respectively connected to the first voltage source and an output end of the self-locking circuit, the output end of the self-locking circuit is further connected to the first switching transistor, a backup power port of the backup power box is connected to a wire via a connection point, and the relay is connected between the connection point and a power grid; or controlling the self-locking circuit not to output the control signal, to control the first switching transistor to switch to a turn-off state.

With reference to the second aspect, in a possible implementation, the controlling a self-locking circuit to output a control signal includes: when an on-grid instruction is received, controlling a first drive circuit in the self-locking circuit to generate a single pulse signal to trigger the self-locking circuit to output the control signal. The first drive circuit is connected to an anode of a diode in the self-locking circuit, a cathode of the diode is connected to a base of a second switching transistor in the self-locking circuit, an emitter of the second switching transistor is connected to an emitter of a fourth switching transistor in the self-locking circuit, a collector of the second switching transistor is connected to a base of a third switching transistor in the self-locking circuit, one end of a self-locking resistor in the self-locking circuit is connected to a connection point between the cathode of the diode and the base of the second switching transistor, and the other end of the self-locking resistor is connected to a connection point between the emitter of the second switching transistor and the emitter of the fourth switching transistor. An emitter of the third switching transistor is connected to a second voltage source, a collector of the third switching transistor is connected to a base of the fourth switching transistor, a collector of the fourth switching transistor is configured to connect to a base of the first switching transistor, one end of a second on-resistor in the self-locking circuit is connected to a connection point between the second voltage source and the emitter of the third switching transistor, and the other end of the second on-resistor is connected to a connection point between the base of the third switching transistor and the collector of the second switching transistor.

With reference to the second aspect, in a possible implementation, the controlling the self-locking circuit not to output the control signal includes: when an off-grid instruction is received, controlling a second drive circuit in the self-locking circuit to generate a single pulse signal to trigger the self-locking circuit not to output the control signal. A first drive circuit in the self-locking circuit is connected to an anode of a diode in the self-locking circuit, a cathode of the diode is connected to a base of a second switching transistor in the self-locking circuit, an emitter of the second switching transistor is connected to an emitter of a fourth switching transistor in the self-locking circuit, a collector of the second switching transistor is connected to a base of a third switching transistor in the self-locking circuit, one end of a self-locking resistor in the self-locking circuit is connected to a connection point between the cathode of the diode and the base of the second switching transistor, and the other end of the self-locking resistor is connected to a connection point between the emitter of the second switching transistor and the emitter of the fourth switching transistor. An emitter of the third switching transistor is connected to a second voltage source, a collector of the third switching transistor is connected to a base of the fourth switching transistor, a collector of the fourth switching transistor is configured to connect to a base of the first switching transistor, one end of a second on-resistor in the self-locking circuit is connected to a connection point between the second voltage source and the emitter of the third switching transistor, and the other end of the second on-resistor is connected to a connection point between the base of the third switching transistor and the collector of the second switching transistor. The second drive circuit is connected to a base of a fifth switching transistor in the self-locking circuit, an emitter of the fifth switching transistor is connected to a connection point between the second switching transistor and the fourth switching transistor, and a collector of the fifth switching transistor is connected to a connection point between the second voltage source and the third switching transistor.

For technical effects that may be achieved in the second aspect, refer to descriptions of technical effects that may be achieved in any possible implementation of the first aspect. Details are not described herein again.

### BRIEF DESCRIPTION OF DRAWINGS

FIG. 1 is a diagram of a scenario to which this application is applicable;
FIG. 2 to FIG. 17 each are a diagram of a backup power box according to an embodiment of this application; and

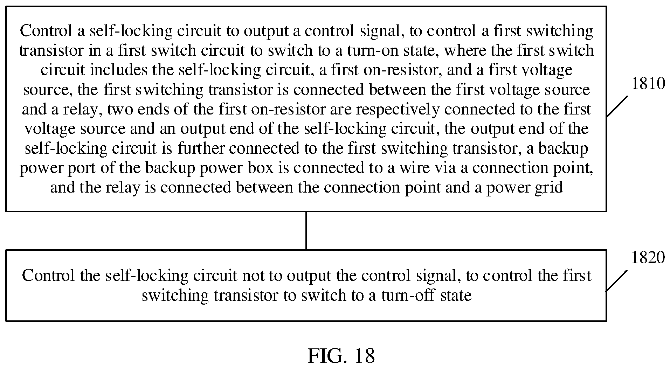

FIG. 18 is a diagram of a control method for a backup power box according to an embodiment of this application.

### DESCRIPTION OF EMBODIMENTS

The following describes technical solutions of this application with reference to accompanying drawings.

For ease of understanding, the following first briefly describes terms used in this application.

On-grid: A direct current generated by a generator set is converted by an inverter into an alternating current that meets a requirement of a power grid, and then the alternating current is input to the power grid. Therefore, on-grid may be understood as that a power generation system is connected to the power grid.

Off-grid: A direct current generated by a generator set is converted by an inverter into an alternating current, and the alternating current cannot be transmitted to a power grid. Therefore, off-grid may be understood as that a power generation system is not connected to the power grid.

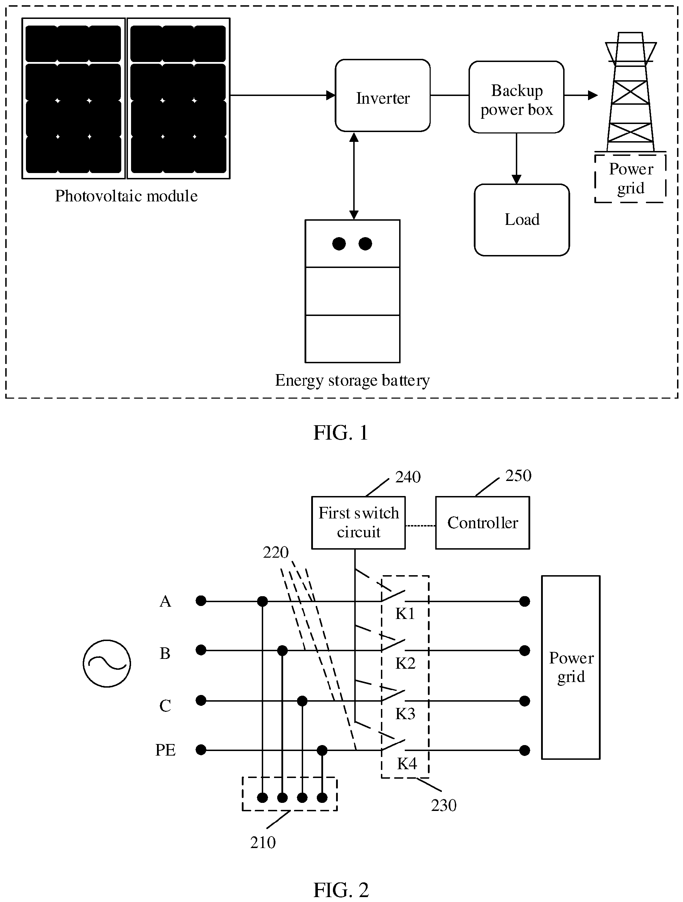

FIG. 1 is a diagram of a scenario to which this application is applicable. Refer to FIG. 1. A photovoltaic module converts solar energy into a direct current through photovoltaic effect, and an inverter converts the direct current into an alternating current and then sends the alternating current to a power grid. Alternatively, the inverter may convert a direct current from an energy storage battery into an alternating current, and then send the alternating current to the power grid.

In addition, a backup power box is further connected between the inverter and the power grid. A main function of the backup power box is as follows: When the power grid is faulty, the backup power box may receive electric energy to supply power to a load. For example, when the photovoltaic module and the inverter are in an off-grid mode, that is, the photovoltaic module and the inverter are disconnected from the power grid, the backup power box may still provide electric energy for the load by using the alternating current obtained through conversion performed by the inverter. In this way, even if the photovoltaic module and the inverter are in the off-grid mode, the backup power box may still normally supply power to the load.

Especially in emergencies, it needs to be ensured that the backup power box can normally supply power to the load. However, when the backup power box cannot work normally, for example, when the backup power box needs to be upgraded, the backup power box cannot supply power to the load. Consequently, reliable running of the load cannot be ensured.

Based on this, FIG. 2 is a diagram of a backup power box according to this application. The backup power box includes a plurality of backup power ports 210, a multiphase wire 220, a plurality of relays 230, a first switch circuit 240, and a controller 250. The plurality of relays are K1, K2, K3, and K4 shown in the figure.

Two ends of each phase wire of the multiphase wire are respectively configured to connect to an inverter and a power grid. Each of the plurality of backup power ports is connected to each phase wire via a connection point, and each of the plurality of relays is connected between each connection point and the power grid.

In this embodiment of this application, FIG. 2 shows a three-phase four-wire system, and the three-phase four-wire system is a line manner generally used for a power transmission line in a low-voltage power distribution network. Three wires represent three phases: A, B, and C, and the other wire is a ground wire PE. In this embodiment of this application, three phase wires A, B, and C may be understood as live wires, and a PE wire may be understood as a ground wire. The live wire is a power wire through which electricity is transmitted in a circuit, and the ground wire is a conducting wire that is in an electric power system or an electronic device and that is grounded, connected to a housing, or connected to a reference potential that is zero.

In this embodiment of this application, one relay is connected in series on each phase wire. For example, the relay K1 is connected in series on an A-phase wire, the relay K2 is connected in series on a B-phase wire, the relay K3 is connected in series on a C-phase wire, and the relay K4 is connected in series on a PE-phase wire.

In this embodiment of this application, an example in which three phase live wires is included is used, for example, the A-phase wire, the B-phase wire, and the C-phase wire in the foregoing description. Relays on the live wires may be connected in series, that is, the relay K1, the relay K2, and the relay K3 are connected in series; or relays on the live wires may be connected in parallel, that is, the relay K1, the relay K2, and the relay K3 are connected in parallel. For ease of unified description, the following uses an example in which the relay K1, the relay K2, and the relay K3 are connected in parallel.

FIG. 2 shows that the first switch circuit 240 controls the four relays. The four relays may be controlled by one first switch circuit, or may be controlled by a plurality of first switch circuits.

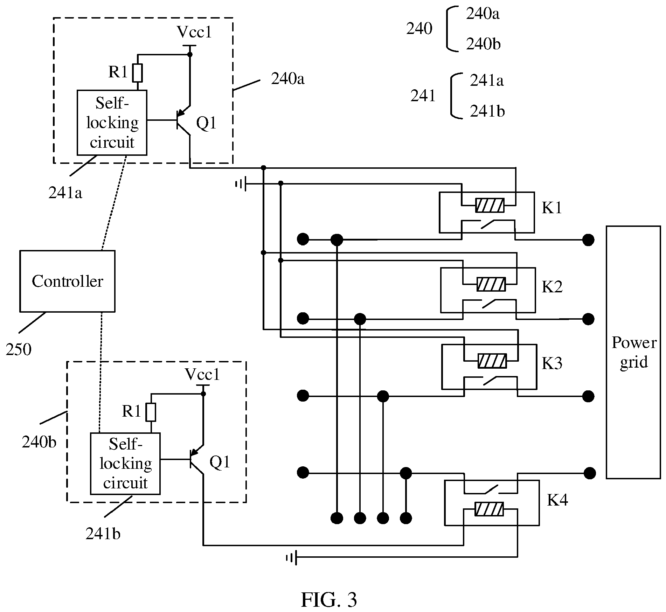

In a possible implementation, relays connected in series on the three phase wires A, B, and C are controlled by a separate first switch circuit after being connected in parallel, and a relay connected in series on the PE-phase wire is controlled by another separate first switch circuit, as shown in FIG. 3.

Refer to FIG. 3. The first switch circuit 240 includes a first switch circuit 240a and a first switch circuit 240b. The first switch circuit 240a is configured to control the relays K1, K2, and K3, and the first switch circuit 240b is configured to control the relay K4.

The first switch circuit 240 includes a first switching transistor Q1, a first voltage source Vcc1, a first on-resistor R1, and a self-locking circuit 241. The first switch circuit 240a includes a first switching transistor Q1, a first voltage source Vcc1, a first on-resistor R1, and a self-locking circuit 241a, and the first switch circuit 240b includes a first switching transistor Q1, a first voltage source Vcc1, a first on-resistor R1, and a self-locking circuit 241b.

The first switching transistor Q1 is connected between the first voltage source and a coil of one relay of the plurality of relays, two ends of the first on-resistor R1 are respectively connected to the first voltage source and an output end of the self-locking circuit, and the output end of the self-locking circuit is further connected to the first switching transistor Q1.

The controller 250 is configured to control the self-locking circuit to output a control signal, to control the first switching transistor Q1 to switch to a turn-on state.

The self-locking circuit is configured to: when the first switching transistor Q1 is in the turn-on state and the controller is incapable of controlling the self-locking circuit to output the control signal, continuously output the control signal to maintain the first switching transistor Q1 in the turn-on state.

In this embodiment of this application, the first switch circuit 240a is used as an example. The first switch circuit 240a is configured to switch on or off the relays K1, K2, and K3. When the controller 250 controls the self-locking circuit 241a to output the control signal, the first switching transistor Q1 is turned on, and a loop in which the first voltage source Vcc1 supplies power to the coil of the relay is conducted. A current passes through the coil, which generates electromagnetic effect. An armature overcomes anti-spring pulling force and is attracted to an iron core under attraction of electromagnetic force, to drive a movable contact and a static contact of the armature to attract to each other. In this way, electric energy can be transmitted via a multiphase live wire. When the controller 250 cannot control the self-locking circuit 241a to output the control signal, the self-locking circuit 241a may still continuously output the control signal to maintain the turn-on state of the first switching transistor Q1, and the relays K1, K2, and K3 are always in an on state. Therefore, electric energy can be continuously transmitted via the multiphase live wire. Particularly, when the controller 250 cannot control the self-locking circuit 241a to output the control signal, for example, when the backup power box is being upgraded, the self-locking circuit 241a may still continuously output the control signal to maintain the turn-on state of the first switching transistor Q1, and the relays K1, K2, and K3 are always in the on state. Therefore, in an upgrade process of the backup power box, the backup power box can continuously supply power to a load through a backup power port, that is, the load at the backup power port is not powered off in the upgrade process of the backup power box.

Specifically, for example, a voltage output by the first voltage source Vcc1 is 5 V, and a turn-on voltage of the first switching transistor Q1 is 3.4 V When the first voltage source Vcc1 outputs a 5 V voltage, and it is assumed that a voltage at a base of the first switching transistor Q1 is 1.4 V, a voltage between the base and an emitter of the first switching transistor Q1 is 3.6 V and is slightly greater than the turn-on voltage of the first switching transistor Q1. In this way, the first switching transistor Q1 is turned on. When the first switching transistor Q1 is turned on, a loop in which the first voltage source Vcc1 supplies power to coils of the relays K1, K2, and K3 is conducted. Therefore, electric energy can be transmitted via the multiphase live wire. When the controller 250 cannot control the self-locking circuit 241a to output the control signal, a function of the self-locking circuit 241a is to maintain the turn-on state of the first switching transistor Q1 in the first switch circuit 240a, so that the relays K1, K2, and K3 are always in an on state.

The first switch circuit 240b is configured to switch on or off the relay K4. When the controller 250 controls the self-locking circuit 241b to output the control signal, and the first voltage source Vcc1 is large enough to turn on the first switching transistor Q1, a loop in which the first voltage source Vcc1 supplies power to a coil of the relay is conducted. A current passes through the coil, which generates electromagnetic effect. An armature overcomes anti-spring pulling force and is attracted to an iron core under attraction of electromagnetic force, to drive a movable contact and a static contact of the armature to attract to each other. In this way, a neural wire is connected to the ground. When the controller 250 cannot control the self-locking circuit 241b to output the control signal, the self-locking circuit 241b may still continuously output the control signal to maintain a turn-on state of the first switching transistor Q1. In this case, the relay K4 is always in an on state, and the neutral wire is continuously connected to the ground. This can avoid personal injury to a user caused by accidental energization of a metal housing when an electrical device is faulty.

A principle of the first switch circuit 240b is similar to a principle of the first switch circuit 240a. When the first switching transistor Q1 is turned on, a loop in which the first voltage source Vcc1 supplies power to the coil of the relay K4 is conducted. Therefore, the ground wire is grounded, and when an electrical device connected to a live wire is faulty and a metal housing is accidentally energized, a current may flow to the ground through the ground wire, to avoid personal injury to the user. When the controller 250 cannot control the self-locking circuit 241b to output the control signal, a function of the self-locking circuit 241b is to maintain the turn-on state of the first switching transistor Q1 in the first switch circuit 240b. This can ensure that the ground wire is always connected to the ground, and prevent personal injury to the user caused by accidental energization of the metal housing when the electrical device is faulty.

In FIG. 3, an example in which the first switching transistor is a giant transistor is used. The first switching transistor may alternatively be a metal-oxide-semiconductor field-effect transistor (metal-oxide-semiconductor field-effect transistor, MOSFET), or may be an insulated gate bipolar transistor (insulated gate bipolar transistor, IGBT) or a gallium nitride (gallium nitride, GaN) high electron mobility transistor (high electron mobility transistor, HEMT), or the like.

The following describes possible topologies of the self-locking circuit.

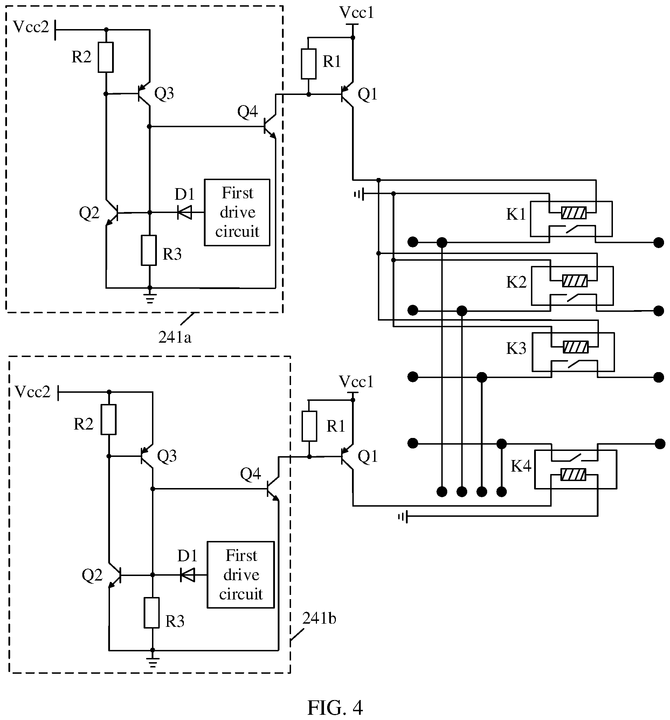

In an embodiment, as shown in FIG. 4, a self-locking circuit includes a second switching transistor Q2, a third switching transistor Q3, a fourth switching transistor Q4, a second voltage source Vcc2, a diode D1, a first drive circuit, a second on-resistor R2, and a self-locking resistor R3.

An anode of the diode D1 is connected to the first drive circuit, a cathode of the diode D1 is connected to a base of the second switching transistor Q2, an emitter of the second switching transistor Q2 is connected to an emitter of the fourth switching transistor Q4, a collector of the second switching transistor Q2 is connected to a base of the third switching transistor Q3, one end of the self-locking resistor R3 is connected to a connection point between the cathode of the diode D1 and the base of the second switching transistor Q2, and the other end of the self-locking resistor R3 is connected to a connection point between the emitter of the second switching transistor Q2 and the emitter of the fourth switching transistor Q4.

An emitter of the third switching transistor Q3 is connected to the second voltage source Vcc2, a collector of the third switching transistor Q3 is connected to a base of the fourth switching transistor Q4, a collector of the fourth switching transistor Q4 is configured to connect to a base of the first switching transistor Q1, one end of the second on-resistor R2 is connected to a connection point between the second voltage source Vcc2 and the emitter of the third switching transistor Q3, and the other end of the second on-resistor R2 is connected to a connection point between the base of the third switching transistor Q3 and the collector of the second switching transistor Q2.

In this embodiment of this application, that a turn-on voltage of a switching transistor is 3.4 V is still used as an example. When the first drive circuit outputs a pulse signal whose high level is 4 V, the high-level signal is transmitted to the base of the second switching transistor Q2 due to a unidirectional conduction characteristic of a diode. Because the emitter of the second switching transistor Q2 is connected to a reference ground, a voltage between the base and the emitter of the second switching transistor Q2 is greater than a turn-on voltage of the second switching transistor Q2. In this way, the second switching transistor Q2 is turned on. When the second switching transistor Q2 is turned on, a loop passing from the second voltage source Vcc2 through the second on-resistor R2 and the second switching transistor Q2 is conducted. Therefore, a current flows through the second on-resistor R2, and there is a voltage difference between the two ends of the second on-resistor R2. In addition, the third switching transistor Q3 is a PNP-type switching transistor, a high-potential end of the second on-resistor R2 is connected to the emitter of the third switching transistor Q3, and a low-potential end of the second on-resistor R2 is connected to the base of the third switching transistor Q3. Therefore, when the voltage difference between the two ends of the second on-resistor R2 is greater than a turn-on voltage 3.4 V of the third switching transistor Q3, the third switching transistor Q3 is turned on. That the third switching transistor Q3 is turned on is equivalent to that the base of the fourth switching transistor Q4 is connected to the second voltage source Vcc2. Because the emitter of the fourth switching transistor Q4 is connected to the reference ground, when a difference between a voltage at the base of the fourth switching transistor Q4 and a voltage at the emitter of the fourth switching transistor Q4 is greater than a turn-on voltage of the fourth switching transistor Q4, the fourth switching transistor Q4 is turned on. When the fourth switching transistor Q4 is turned on, a loop passing from the first voltage source Vcc1 through the first on-resistor R1 and the fourth switching transistor Q4 is conducted. In this case, a current flows through the first on-resistor R1, and there is a voltage difference between the two ends of the first on-resistor R1. In addition, the first switching transistor Q1 is a PNP-type switching transistor, a high-potential end of the first on-resistor R1 is connected to an emitter of the first switching transistor Q1, and a low-potential end of the first on-resistor R1 is connected to the base of the first switching transistor Q1. Therefore, when the voltage difference between the two ends of the first on-resistor R1 is greater than a turn-on voltage 3.4 V of the first switching transistor Q1, the first switching transistor Q1 is turned on. In this way, a loop in which the first voltage source Vcc1 supplies power to a coil of a relay via the fourth switching transistor Q1 is conducted.

In addition, when the third switching transistor Q3 is turned on, a loop passing from the second voltage source Vcc2 through the third switching transistor Q3 and the self-locking resistor R3 is conducted. That is, a current flows through the self-locking resistor R3, and there is a voltage difference between the two ends of the self-locking resistor R3. In addition, the second switching transistor Q2 is an NPN-type switching transistor, a high-potential end of the self-locking resistor R3 is connected to the base of the second switching transistor Q2, and a low-potential end of the self-locking resistor R3 is connected to the emitter of the second switching transistor Q2. Therefore, when the voltage difference between the two ends of the self-locking resistor R3 is greater than a turn-on voltage 3.4 V of the second switching transistor Q2, the second switching transistor Q2 is continuously in a turn-on state. This can provide a condition for the third switching transistor Q3 to be continuously turned on. Therefore, the third switching transistor Q3, the fourth switching transistor Q4, and the first switching transistor Q1 are continuously in a turn-on state.

In addition, when the first drive circuit outputs a low-level signal at a moment, the low-level signal cannot pass through the diode D1 due to a unidirectional conduction characteristic of a diode, and a voltage at the base of the second switching transistor Q2 is always greater than a voltage at the emitter of the second switching transistor Q2. Therefore, the second switching transistor Q2 is continuously in the turn-on state. In this way, the third switching transistor Q3, the fourth switching transistor Q4, and the first switching transistor Q1 are continuously in the turn-on state.

Alternatively, when the first drive circuit cannot output a signal temporarily, for example, the backup power box needs to be upgraded, because the self-locking circuit is designed, the self-locking circuit may maintain the turn-on state of the first switching transistor Q1. Therefore, in an upgrade process of the backup power box, a load at a backup power port is not powered off, that is, the backup power box can continuously supply power to the load.

It should be noted that, according to the foregoing analysis, the first drive circuit can actually trigger the self-locking circuit to output the control signal as long as the first drive circuit outputs a single pulse signal. As long as the self-locking circuit outputs the control signal, whether the first drive circuit subsequently outputs a low-level signal or does not output a signal, the self-locking circuit may still output the control signal to maintain the turn-on state of the first switching transistor Q1.

Therefore, in an embodiment, when the controller 250 receives an on-grid instruction, the controller 250 is configured to control the first drive circuit to generate a single pulse signal to trigger the self-locking circuit to output the control signal, to switch the first switching transistor to be in the turn-on state.

The single pulse signal in this embodiment of this application may be understood as a signal of a single pulse, and the single pulse signal includes only a high-level signal with short duration. For example, the first drive circuit outputs a high-level signal within 5 ms duration, and outputs low-level signals in other time periods.

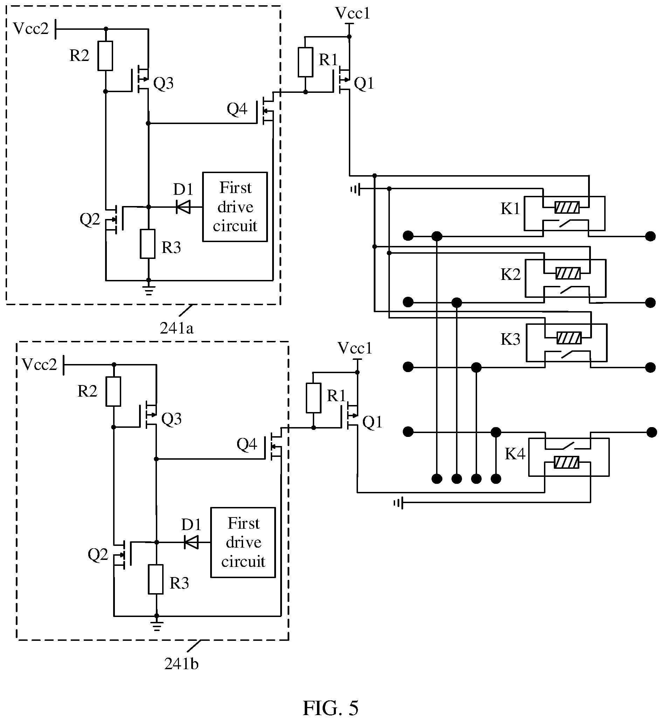

In an embodiment, as shown in FIG. 5, a self-locking circuit includes a second switching transistor Q2, a third switching transistor Q3, a fourth switching transistor Q4, a second voltage source Vcc2, a diode D1, a first drive circuit, a second on-resistor R2, and a self-locking resistor R3.

The first drive circuit is connected to a gate of the second switching transistor Q2 via the diode D1, a source of the second switching transistor Q2 is connected to a source of the fourth switching transistor Q4, a drain of the second switching transistor Q2 is connected to a gate of the third switching transistor Q3, one end of the self-locking resistor R3 is connected to a connection point between a cathode of the diode D1 and the gate of the second switching transistor Q2, and the other end of the self-locking resistor R3 is connected to a connection point between the source of the second switching transistor Q2 and the source of the fourth switching transistor Q4.

A source of the third switching transistor Q3 is connected to the second voltage source Vcc2, a drain of the third switching transistor Q3 is connected to a gate of the fourth switching transistor Q4, a drain of the fourth switching transistor Q4 is configured to connect to a gate of the first switching transistor Q1, one end of the second on-resistor R2 is connected to a connection point between the second voltage source Vcc2 and the source of the third switching transistor Q3, and the other end of the second on-resistor R2 is connected to a connection point between the gate of the third switching transistor Q3 and the drain of the second switching transistor Q2.

A difference between the self-locking circuit shown in FIG. 5 and the self-locking circuit shown in FIG. 4 lies in different types of switching transistors. A switching transistor in this embodiment of this application is a MOSFET. A specific principle of the switching transistor is similar to that in FIG. 4. Details are not described again.

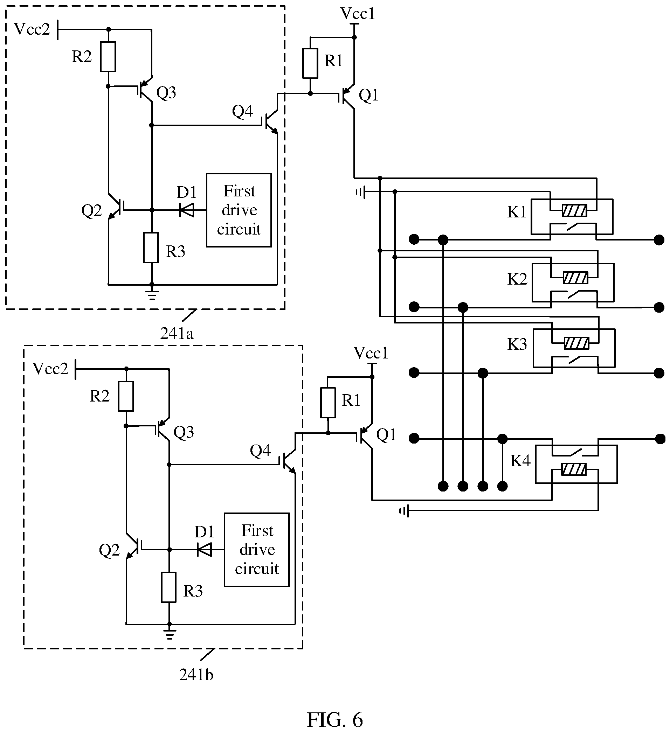

In an embodiment, as shown in FIG. 6, a self-locking circuit includes a second switching transistor Q2, a third switching transistor Q3, a fourth switching transistor Q4, a second voltage source Vcc2, a diode D1, a first drive circuit, a second on-resistor R2, and a self-locking resistor R3.

The first drive circuit is connected to a gate of the second switching transistor Q2 via the diode D1, an emitter of the second switching transistor Q2 is connected to an emitter of the fourth switching transistor Q4, a collector of the second switching transistor Q2 is connected to a gate of the third switching transistor Q3, one end of the self-locking resistor R3 is connected to a connection point between a cathode of the diode D1 and the gate of the second switching transistor Q2, and the other end of the self-locking resistor R3 is connected to a connection point between the emitter of the second switching transistor Q2 and the emitter of the fourth switching transistor Q4.

An emitter of the third switching transistor Q3 is connected to the second voltage source Vcc2, a collector of the third switching transistor Q3 is connected to a gate of the fourth switching transistor Q4, a collector of the fourth switching transistor Q4 is configured to connect to a gate of the first switching transistor Q1, one end of the second on-resistor R2 is connected to a connection point between the second voltage source Vcc2 and the emitter of the third switching transistor Q3, and the other end of the second on-resistor R2 is connected to a connection point between the gate of the third switching transistor Q3 and the collector of the second switching transistor Q2.

A difference between the self-locking circuit shown in FIG. 6 and the self-locking circuit shown in FIG. 4 lies in different types of switching transistors. A switching transistor in this embodiment of this application is an IGBT. A specific principle of the switching transistor is similar to that in FIG. 4. Details are not described again.

FIG. 4 to FIG. 6 show circuit topologies of three different types of switching transistors. The following uses FIG. 4 as an example to continue to describe components that may be included in the first switch circuit.

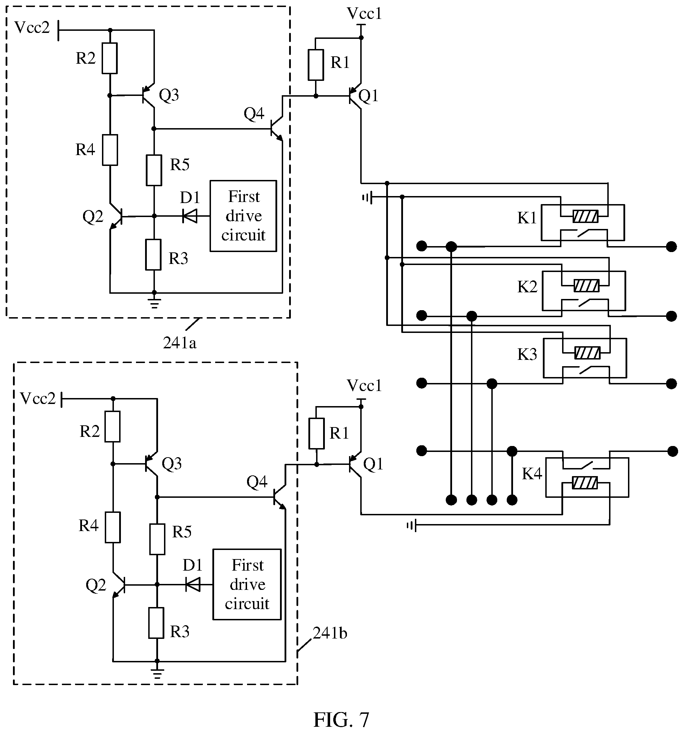

In an embodiment, as shown in FIG. 7, a current-limiting resistor R4 is further connected in series between the collector of the second switching transistor Q2 and a connection point between the second on-resistor R2 and the base of the third switching transistor Q3.

In this embodiment of this application, when a voltage output by the second voltage source Vcc2 is large, if there is no current-limiting resistor R4, the second switching transistor Q2 may be damaged. For example, it is assumed that the voltage output by the second voltage source Vcc2 is 48 V, and if there is no current-limiting resistor R4, the 48 V voltage is applied to the second on-resistor R2 and the second switching transistor Q2. Especially, when a resistance of the second on-resistor R2 is small, a current flowing into the collector of the second switching transistor Q2 is large and may be greater than a limit current of the collector of the second switching transistor Q2. As a result, the second switching transistor Q2 is damaged.

However, in this embodiment of this application, the current-limiting resistor R4 is further connected in series between the collector of the second switching transistor Q2 and the connection point between the second on-resistor R2 and the base of the third switching transistor Q3. In this case, current flowing into the collector of the second switching transistor Q2=voltage output by the second voltage source Vcc2÷(R1+R4). Even if the voltage output by the second voltage source Vcc2 is large, because the current-limiting resistor R4 is designed, a resistance value included in a loop in which the second voltage source is connected to the reference ground via the resistor R2 and the resistor R4 increases, and a current decreases. This can reduce the current flowing into the collector of the second switching transistor Q2, and avoid damage to the second switching transistor Q2.

For example, if a voltage corresponding to a high-level signal output by the drive circuit is 48 V, a limit current that can be borne by the collector of the second switching transistor Q2 is 10 A, there is no current-limiting resistor R4, and a resistance value of the second on-resistor R2 is 2 Ω, the current flowing into the collector of the second switching transistor Q2 is 48÷2=24 A and is far greater than the limit current that can be borne by the collector of the second switching transistor Q2. As a result, the second switching transistor Q2 is easily damaged. When the current-limiting resistor R4 is designed, and a resistance value of the current-limiting resistor R4 is 18 Ω, the current flowing into the collector of the second switching transistor Q2 is 48÷(18+2)=2.4 A, and the current flowing into the collector of the second switching transistor Q2 is significantly reduced. This can avoid damage to the second switching transistor Q2.

In an embodiment, a voltage divider resistor R5 is further connected in series between the self-locking resistor R3 and a connection point between the third switching transistor Q3 and the fourth switching transistor Q4. One end of the voltage divider resistor R5 is connected to a connection point between the base of the second switching transistor Q2 and the diode D1.

In this embodiment of this application, when a voltage output by the second voltage source Vcc2 is large, if there is no voltage divider resistor R5, the second switching transistor Q2 may be damaged. For example, it is assumed that the voltage output by the second voltage source Vcc2 is 48 V, and if there is no voltage divider resistor R5, the 48 V voltage is applied to the self-locking resistor R3, that is, applied between the base and the emitter of the second switching transistor Q2. This voltage may be greater than a limit voltage that can be borne between the base and the emitter of the second switching transistor Q2. As a result, the second switching transistor Q2 is damaged.

However, in this embodiment of this application, the voltage divider resistor R5 is designed, and the second voltage source Vcc2 is connected to the self-locking resistor R3 via the third switching transistor Q3 and the voltage divider resistor R5. Therefore, voltage output by the second voltage source Vcc2=voltage at two ends of the voltage divider resistor R5+voltage at two ends of the self-locking resistor R3, and the voltage at the two ends of the self-locking resistor R3 is a voltage between the base and the emitter of the second switching transistor Q2. Even if the voltage output by the second voltage source Vcc2 is large, the voltage divider resistor R5 may bear most of the voltage, and the voltage at the two ends of the self-locking resistor R3 decreases. This can avoid damage to the second switching transistor Q2.

For example, a turn-on voltage of the second switching transistor Q2 is still 3.4 V. If the voltage output by the second voltage source Vcc2 is 48 V, and a ratio of a resistance value of the voltage divider resistor R5 to a resistance value of the self-locking resistor R3 is 9:1, if a voltage on Q3 is ignored, the voltage at the two ends of the voltage divider resistor R5 may reach 43.2 V, and the voltage at the two ends of R3 is 4.8 V, that is, the voltage between the base and the emitter of the second switching transistor Q2 is 4.8 V. Because the voltage between the base and the emitter of the second switching transistor Q2 is greater than the turn-on voltage of the second switching transistor Q2, the second switching transistor Q2 is turned on. In addition, because most of the voltage output by the second voltage source Vcc2 is borne by R5, the voltage between the base and the emitter of Q2 is slightly greater than the turn-on voltage of Q2. This can avoid damage to the second switching transistor Q2.

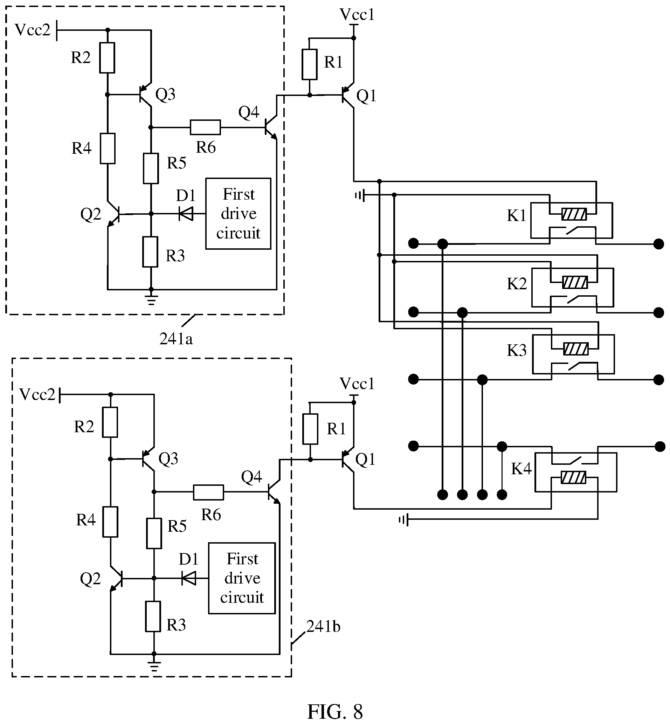

FIG. 8 is a diagram of a backup power box according to an embodiment of this application.

In an embodiment, a current-limiting resistor R6 is further connected in series between the base of the fourth switching transistor Q4 and a connection point between the collector of the third switching transistor Q3 and the self-locking resistor R3.

In this embodiment of this application, when a voltage output by the second voltage source Vcc2 is large, if there is no current-limiting resistor R6, the fourth switching transistor Q4 may be damaged. For example, it is assumed that the voltage output by the second voltage source Vcc2 is 48 V, and if there is no current-limiting resistor R6, a current flowing into the base of the fourth switching transistor Q4 is large and may be greater than a limit current of the base of the second switching transistor Q2. Consequently, the fourth switching transistor Q4 is damaged.

However, in this embodiment of this application, the current-limiting resistor R6 is further connected in series between the base of the fourth switching transistor and the connection point between the collector of the third switching transistor and the self-locking resistor. In this case, the current flowing into the base of the fourth switching transistor Q4 is a ratio of the voltage output by the second voltage source Vcc2 to the current-limiting resistor R6. Even if the voltage output by the second voltage source Vcc2 is large, because the current-limiting resistor R6 is designed, a resistance value included in a loop in which the second voltage source is connected to the reference ground via the resistor R6 increases, and a current decreases. This can reduce the current flowing into the base of the fourth switching transistor Q4, and avoid damage to the fourth switching transistor Q4.

For example, the voltage output by the second voltage source Vcc2 is 48 V, and a limit current that can be borne by the base of the fourth switching transistor Q4 is 10 A. In this case, if there is no current-limiting resistor R6, and it is assumed that resistance values of the third switching transistor Q3 and the fourth switching transistor Q4 are 1 Ω, the current flowing into the base of the second switching transistor Q2 is 48÷1=48 A and is far greater than the limit current that can be borne by the base of the fourth switching transistor Q4. Consequently, the fourth switching transistor Q4 is easily damaged. When the current-limiting resistor R6 is designed, and the current-limiting resistor R6 is 19 Ω, the current flowing into the base of the fourth switching transistor Q4 is 48÷(19+1)=2.4 A, and the current flowing into the base of the fourth switching transistor Q4 is significantly reduced. This can avoid damage to the fourth switching transistor Q4.

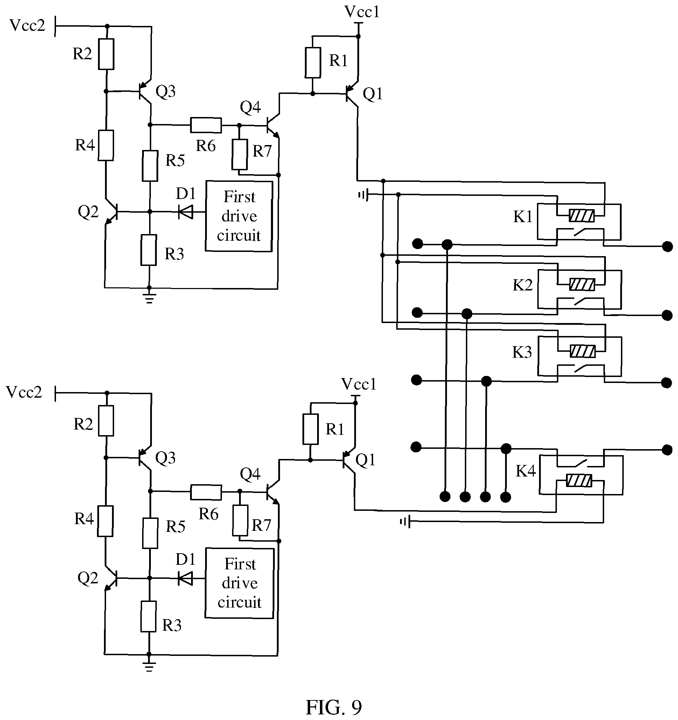

FIG. 9 is a diagram of a backup power box according to an embodiment of this application.

In an embodiment, a discharge resistor R7 is further connected between the base of the fourth switching transistor Q4 and the emitter of the fourth switching transistor Q4.

In this embodiment of this application, the fourth switching transistor Q4 may have a parasitic capacitor, and the parasitic capacitor causes a signal transmission delay. When a parasitic capacitance value of the fourth switching transistor Q4 is large, rise time and fall time of a signal increase. This affects a response speed of the fourth switching transistor Q4. Specifically, if there is no discharge resistor R7, when the first drive circuit outputs a high-level signal, a turn-on speed of the fourth switching transistor Q4 is affected; or when the first drive circuit outputs a low-level signal, a turn-off speed of the fourth switching transistor Q4 is affected.

In this embodiment of this application, because the discharge resistor R7 is designed, and the base of the fourth switching transistor Q4 is connected to the reference ground via the discharge resistor R7, energy on the parasitic capacitor may be discharged through the discharge resistor R7. This can reduce impact brought by the parasitic capacitor on the turn-on or turn-off speed of the fourth switching transistor Q4.

Based on this, it is described above that when the first switching transistor Q1 is turned on and the controller is incapable of controlling the self-locking circuit to output the control signal, the self-locking circuit maintains the turn-on state of the first switching transistor Q1. In a possible scenario, the first switching transistor Q1 needs to be in a turn-off state. The following describes a turn-off process of the first switching transistor Q1.

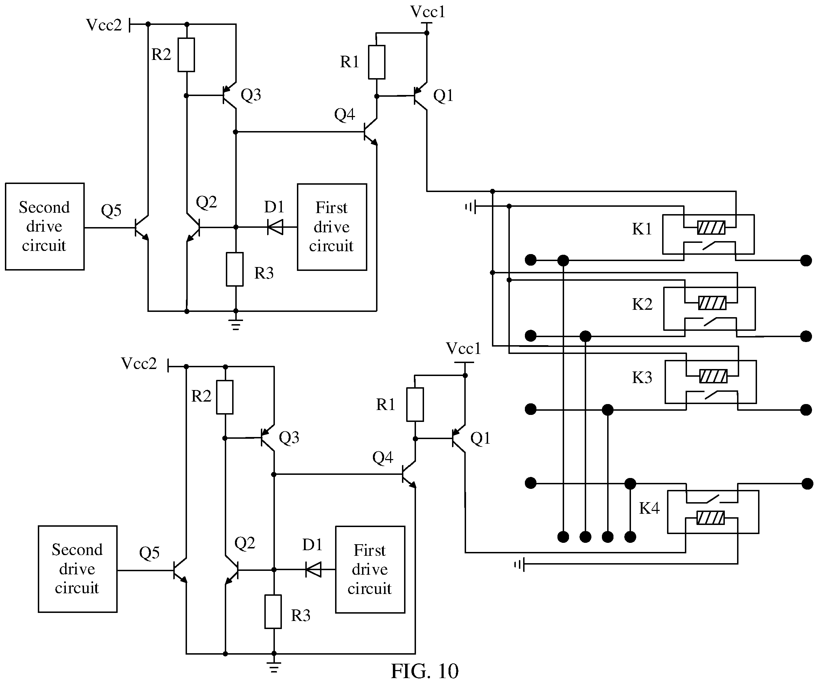

In an embodiment, as shown in FIG. 10, the self-locking circuit further includes a fifth switching transistor Q5 and a second drive circuit.

The second drive circuit is connected to a base of the fifth switching transistor Q5, an emitter of the fifth switching transistor Q5 is connected to a connection point between the second switching transistor Q2 and the fourth switching transistor Q4, and a collector of the fifth switching transistor Q5 is connected to a connection point between the second voltage source Vcc2 and the third switching transistor Q3.

The controller 250 is configured to control the self-locking circuit not to output the control signal, to control the first switching transistor to switch to the turn-off state.

The self-locking circuit is configured to: when the first switching transistor is in the turn-off state and the controller is incapable of controlling the self-locking circuit not to output the control signal, continuously skip outputting the control signal to maintain the turn-off state of the first switching transistor.

In this embodiment of this application, because the base of the fifth switching transistor Q5 is connected to the second drive circuit, and the emitter of the fifth switching transistor Q5 is connected to the reference ground, when the second drive circuit outputs a high level, the fifth switching transistor Q5 is turned on. When the fifth switching transistor Q5 is turned on, a voltage at a connection point between the fifth switching transistor and the second voltage source Vcc2 is pulled down. This is equivalent to that the emitter of the third switching transistor Q3 is connected to the reference ground. Therefore, the third switching transistor Q3 is turned off. When the third switching transistor Q3 is turned off, a voltage output by the second voltage source Vcc2 cannot be transmitted to the fourth switching transistor. Therefore, the fourth switching transistor Q4 is turned off. Further, when the fourth switching transistor Q4 is turned off, a voltage output by the first voltage source Vcc1 cannot pass through the first on-resistor R1 and the fourth switching transistor Q4/the first voltage source Vcc1 cannot form a loop with the first on-resistor R1 and the fourth switching transistor Q4, and there is no voltage difference between two ends of the first on-resistor R1. Therefore, the first switching transistor Q1 is turned off. Therefore, a loop passing from the first voltage source Vcc1 through the first switching transistor Q1 and a coil of a relay is disconnected, no current flows through the coil of the relay, a contact of the relay is open, and the inverter is disconnected from the power grid. When the controller 250 cannot control the self-locking circuit not to output the control signal, a function of the self-locking circuit is to maintain the turn-off state of the first switching transistor Q1, so that the relay is always in an off state. This can ensure that the inverter is disconnected from the power grid, and ensure reliable disconnection from the power grid in an off-grid mode.

Specifically, when the second drive circuit outputs a high level, a voltage at the base of the fifth switching transistor Q5 is greater than a voltage at the emitter of the fifth switching transistor Q5. When a voltage between the base of the fifth switching transistor Q5 and the emitter of the fifth switching transistor Q5 is greater than a turn-on voltage of the fifth switching transistor Q5, the fifth switching transistor Q5 is turned on, and a voltage at the connection point between the fifth switching transistor and the second voltage source Vcc2 is pulled down, that is, the voltage at the emitter of the third switching transistor Q3 decreases. In this case, the voltage at the emitter of the third switching transistor Q3 is less than the voltage at the base of the third switching transistor Q3, and the third switching transistor Q3 is turned off. Because the third switching transistor Q3 is turned off, the voltage output by the second voltage source Vcc2 cannot be transmitted to the fourth switching transistor Q4, and there is no voltage difference between the base and the emitter of the fourth switching transistor Q4, the fourth switching transistor Q4 is turned off. When the fourth switching transistor Q4 is turned off, a loop passing from the first voltage source Vcc1 through the first on-resistor R1 and the fourth switching transistor Q4 is disconnected, no current flows through the first on-resistor R1, and there is no voltage difference between the two ends of the first on-resistor R1, that is, there is no voltage difference between the base and the emitter of the first switching transistor Q1. Therefore, the first switching transistor Q1 is turned off.

In addition, because the third switching transistor Q3 is turned off, a loop passing from the second voltage source Vcc2 through the third switching transistor Q3 and the self-locking resistor R3 is disconnected. No current flows through the self-locking resistor R3, and there is no voltage difference between the two ends of the self-locking resistor R3, that is, there is no voltage difference between the base and the emitter of the second switching transistor Q2. Therefore, the second switching transistor Q2 is turned off. Because the second switching transistor Q2 is turned off, a condition for turning on the third switching transistor Q3 cannot be provided, the third switching transistor Q3 is turned off, and further, the fourth switching transistor Q4 and the first switching transistor Q1 are turned off.

As described above, when the second drive circuit outputs a high-level signal, the first switching transistor Q1 is turned off, and then, even if the second drive circuit outputs a low-level signal, the first switching transistor Q1 is still in a turn-off state. This is because although the second drive circuit outputs the low-level signal, to enable the fifth switching transistor Q5 to be turned off, the first drive circuit outputs a single pulse signal having only one high-level signal that can enable the second switching transistor Q2 to be turned on, and other low-level signals cannot enable the second switching transistor Q2 to be turned on. Therefore, a voltage output by the second voltage source Vcc2 cannot pass through the second switching transistor Q2, and there is no voltage difference between the two ends of the second on-resistor R2. Consequently, the third switching transistor Q3 cannot be turned on, and neither the fourth switching transistor Q4 nor the first switching transistor Q1 can be turned on. In this way, the turn-off state of the first switching transistor Q1 can be maintained.

Particularly, when the power grid is faulty, the self-locking circuit designed in this embodiment of this application can always maintain the turn-off state of the first switching transistor Q1, that is, can maintain the relay always in an off state, to avoid misconnection between the inverter and the power grid, and ensure reliable disconnection between the inverter and the power grid.

It should be noted that, according to the foregoing analysis, the second drive circuit can actually trigger the self-locking circuit not to output the control signal as long as the second drive circuit outputs a single pulse signal. As long as the self-locking circuit does not output the control signal, whether the second drive circuit subsequently outputs a low-level signal or does not output a signal, the self-locking circuit may still not output the control signal, to maintain the turn-off state of the first switching transistor Q1.

Therefore, in an embodiment, when the controller receives an off-grid instruction, the controller is configured to control the second drive circuit to generate a single pulse signal to trigger the self-locking circuit not to output the control signal, to switch the first switching transistor to the turn-off state.

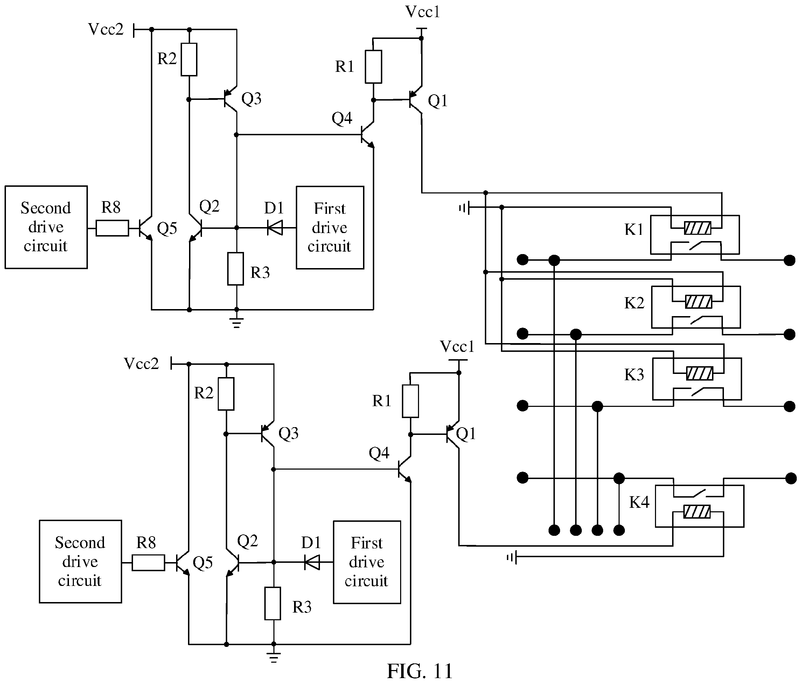

In an embodiment, as shown in FIG. 11, a current-limiting resistor R8 is further connected in series between the second drive circuit and the base of the fifth switching transistor Q5.

In this embodiment of this application, when a voltage output by the second drive circuit is large, if there is no current-limiting resistor R8, the fifth switching transistor Q5 may be damaged. For example, it is assumed that the voltage output by the second drive circuit is 48 V, and if there is no current-limiting resistor R8, a current flowing into the base of the fifth switching transistor Q5 is large and may be greater than a limit current of the base of the fifth switching transistor Q5. Consequently, the fifth switching transistor Q5 is damaged.

However, in this embodiment of this application, the current-limiting resistor R8 is further connected in series between the second drive circuit and the base of the fifth switching transistor Q5. In this case, the current flowing into the base of the fifth switching transistor Q5 is a ratio of the voltage output by the second drive circuit to a resistance value of the current-limiting resistor R8. Even if the voltage output by the second drive circuit is large, the current-limiting resistor R8 may increase a resistance value of a loop in which the second drive circuit is connected to the reference ground via the switching transistor Q5, so that the current flowing into the base the fifth switching transistor Q5 can be reduced. This can avoid damage to the fifth switching transistor Q5.

For example, the voltage output by the second drive circuit is 48 V, and a limit current that can be borne by the base of the fifth switching transistor Q5 is 10 A. In this case, if there is no current-limiting resistor R8, and it is assumed that a resistance value of the fifth switching transistor Q5 is 1 Ω, the current flowing into the base of the fifth switching transistor Q5 is 48÷1=48 A and is far greater than the limit current that can be borne by the base of the fifth switching transistor Q5. Consequently, the fifth switching transistor Q5 is easily damaged. When the current-limiting resistor R8 is designed, and the resistance value of the current-limiting resistor R8 is 19 Ω, the current flowing into the base of the fifth switching transistor Q5 is 48÷(19+1)=2.4 A, and the current flowing into the base of the fifth switching transistor Q5 is significantly reduced. This can avoid damage to the fifth switching transistor Q5.

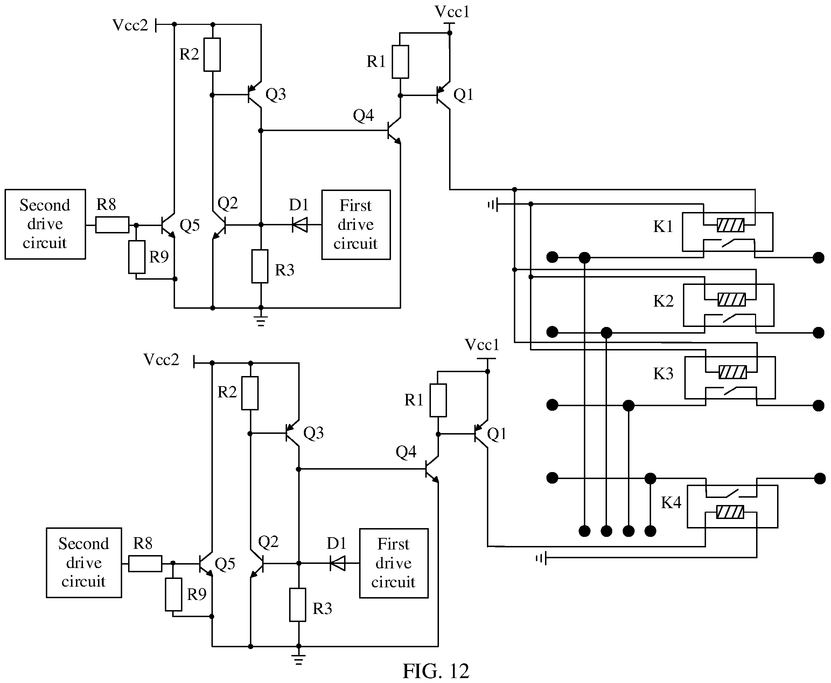

In an embodiment, as shown in FIG. 12, a discharge resistor R9 is further connected between the base of the fifth switching transistor Q5 and the emitter of the fifth switching transistor Q5.

In this embodiment of this application, the fifth switching transistor Q5 may have a parasitic capacitor, and the parasitic capacitor causes a signal transmission delay. When a parasitic capacitance value of the fifth switching transistor Q5 is large, rise time and fall time of a signal increase. This affects a response speed of the fifth switching transistor Q5. Specifically, if there is no discharge resistor R9, when the second drive circuit outputs a high-level signal, a turn-on speed of the fifth switching transistor Q5 is affected; or when the second drive circuit outputs a low-level signal, a turn-off speed of the fifth switching transistor Q5 is affected.

In this embodiment of this application, because the discharge resistor R9 is designed, and the base of the fifth switching transistor Q5 is connected to the reference ground via the discharge resistor R9, energy on the parasitic capacitor may be discharged through the discharge resistor R9. This can reduce impact brought by the parasitic capacitor on the turn-on or turn-off speed of the fifth switching transistor Q5.

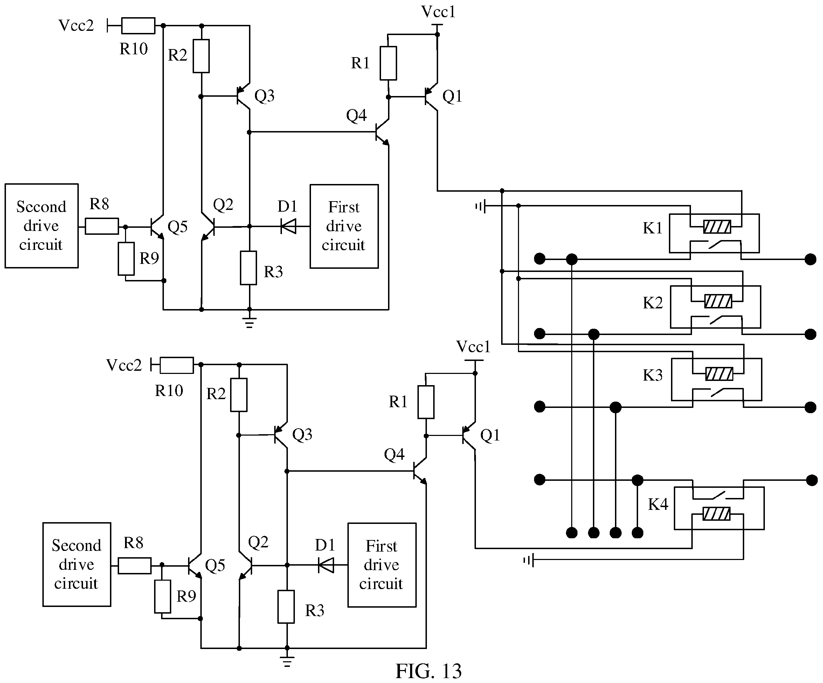

In an embodiment, as shown in FIG. 13, a current-limiting resistor R10 is further connected in series between the second voltage source Vcc2 and a connection point between the fifth switching transistor Q5 and the third switching transistor Q3.

In this embodiment of this application, when a voltage output by the second voltage source Vcc2 is large, if there is no current-limiting resistor R10, the fifth switching transistor Q5 may be damaged. For example, it is assumed that the voltage output by the second voltage source Vcc2 is 48 V, and if there is no current-limiting resistor R10, the 48 V voltage is applied to the fifth switching transistor Q5, and a current flowing into the collector of the fifth switching transistor Q5 may be greater than a limit current of the collector of the fifth switching transistor Q5. Consequently, the fifth switching transistor Q5 is damaged.

However, in this embodiment of this application, the current-limiting resistor R10 is further connected in series between the second voltage source Vcc2 and the connection point between the fifth switching transistor Q5 and the third switching transistor Q3. In this case, the current flowing into the collector of the fifth switching transistor Q5 is a ratio of the voltage output by the second voltage source Vcc2 to R10. Even if the voltage output by the second voltage source Vcc2 is large, the current-limiting resistor R10 can increase a resistance value of a loop in which the second voltage source is connected to the reference ground via the switching transistor Q5, so that the current flowing into the collector of the fifth switching transistor Q5 can be reduced. This can avoid damage to the fifth switching transistor Q5.

For example, the voltage output by the second voltage source Vcc2 is 48 V, and a limit current that can be borne by the collector of the fifth switching transistor Q5 is 10 A. In this case, if there is no current-limiting resistor R10, and it is assumed that a resistance value of the fifth switching transistor Q5 is 1 Ω, the current flowing into the collector of the fifth switching transistor Q5 is 48÷1=48 A and is far greater than the limit current that can be borne by the collector of the fifth switching transistor Q5. Consequently, the second switching transistor Q2 is easily damaged. When the current-limiting resistor R10 is designed, and the resistance value of the current-limiting resistor R10 is 19 Ω, the current flowing into the collector of the fifth switching transistor Q5 is 48÷(18+2)=2.4 A, and the current flowing into the collector of the fifth switching transistor Q5 is significantly reduced. This can avoid damage to the fifth switching transistor Q5.

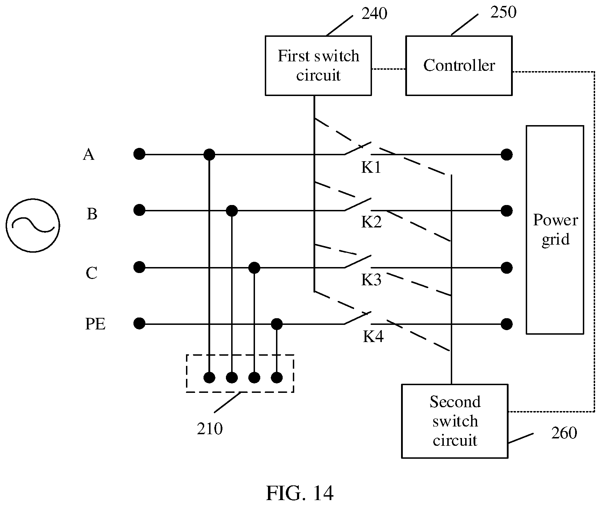

To further improve on-grid or off-grid reliability, as shown in FIG. 14, in an embodiment, the backup power box further includes a second switch circuit 260. The first switch circuit 240, the second switch circuit 260, and one relay are connected in series between the first voltage source Vcc1 and a reference ground.

In this embodiment of this application, the first switch circuit 240, the second switch circuit 260, and the one relay are connected in series between the first voltage source Vcc1 and the reference ground. In this design, the relay is switched on only when both a switching transistor that is in the first switch circuit 240 and that is connected in series to the relay and a switching transistor that is in the second switch circuit 260 and that is connected to the relay are turned on. If a switching transistor in one of the switch circuits is turned on by mistake, and a switching transistor in the other switch circuit is turned off, the relay is still not switched on. This can improve safety of a power grid port.

In addition, when at least one of the switching transistor that is in the first switch circuit 240 and that is connected in series to the relay and the switching transistor that is in the second switch circuit 260 and that is connected to the relay is turned off, the relay is switched off. When the relays K1, K2, K3, and K4 need to be switched off, if one of the switch circuits is faulty, for example, a switching transistor in one switch circuit cannot be turned off, the other switch circuit can be used to ensure that the relays are reliably switched off. This can improve safety of the power grid port.

Similarly, in this embodiment of this application, one second switch circuit may control a plurality of relays, or a plurality of second switch circuits may control a plurality of relays.

In a possible implementation, relays connected in series on three phase wires A, B, and Care controlled by a separate second switch circuit after being connected in parallel, and a relay connected in series on a PE-phase wire is controlled by another separate second switch circuit.

In this embodiment of this application, relative positions of the first switch circuit 240, the second switch circuit 260, and the relays are not specifically limited. The following describes possible position relationships.

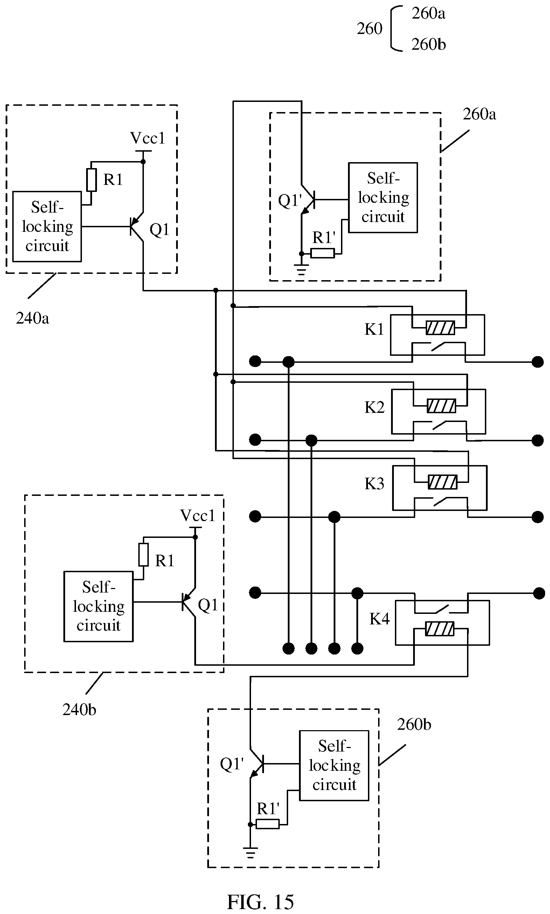

In an embodiment, as shown in FIG. 15, the second switch circuit includes a sixth switching transistor Q1', a third on-resistor R1', and a self-locking circuit.

The first switching transistor Q1 is connected between the first voltage source and one end of a coil of a relay, the other end of the coil of the relay is connected to a collector of the sixth switching transistor Q1', an emitter of the sixth switching transistor Q1' is connected to a reference ground, two ends of the third on-resistor R1' are respectively connected to an output end of the self-locking circuit in the second switch circuit and the reference ground, and the output end of the self-locking circuit in the second switch circuit is further connected to a base of the sixth switching transistor Q1'.

In this embodiment of this application, the first switch circuit is connected to one end of a coil of a relay, and the second switch circuit is connected to the other end of the coil of the relay. When the first switching transistor Q1 and the sixth switching transistor Q1' are turned on, a loop passing from the first voltage source Vcc1 through the first switching transistor Q1, the coil of the relay, and the sixth switching transistor Q1' is conducted. In this way, a current flows through the coil of the relay, which generates electromagnetic effect. An armature overcomes anti spring pulling force and is attracted to an iron core under attraction of electromagnetic force, to drive a movable contact and a static contact of the armature to attract to each other, so that electric energy can be transmitted via a multiphase live wire, and a ground wire can be grounded. In this way, an alternating current output by the inverter can be transmitted to the power grid, and reliable on-grid can be implemented.

When the first switching transistor Q1 or the sixth switching transistor Q1' is turned off, the loop passing from the first voltage source Vcc1 through the first switching transistor Q1, the coil of the relay, and the sixth switching transistor Q1' is disconnected. Therefore, the coil of the relay in the backup power box is open. As a result, electric energy cannot be transmitted to the power grid through the multiphase live wire, and a relay on the ground wire cannot be grounded. In this way, an alternating current output by the inverter cannot be transmitted to the power grid, and reliable off-grid can be implemented.

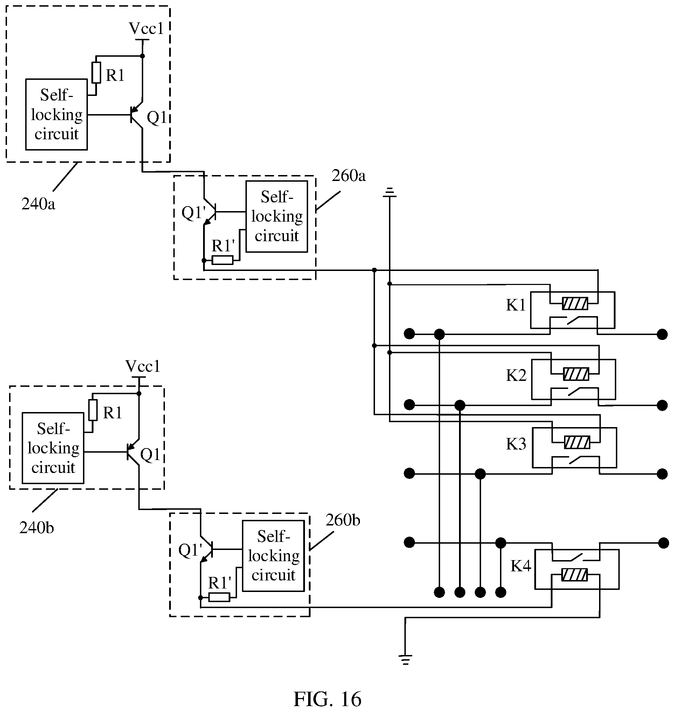

In another embodiment, as shown in FIG. 16, the second switch circuit includes a sixth switching transistor Q1', a third on-resistor R1', and a self-locking circuit.

The first switching transistor Q1 is connected between the first voltage source and a collector of the sixth switching transistor Q1', an emitter of the sixth switching transistor Q1' is connected to one end of a coil of a relay, the other end of the coil of the relay is connected to a reference ground, two ends of the third on-resistor R1' are respectively connected to an output end of the self-locking circuit in the second switch circuit and the emitter of the sixth switching transistor Q1', and the output end of the self-locking circuit in the second switch circuit is further connected to a base of the sixth switching transistor Q1'.

A difference between the circuit topology shown in FIG. 16 and the circuit topology shown in FIG. 15 lies in that, in FIG. 16, the first switch circuit is connected to the second switch circuit, and the second switch circuit is connected to the coil of the relay. A specific principle of the circuit in FIG. 16 is similar to that in FIG. 15. Details are not described again.

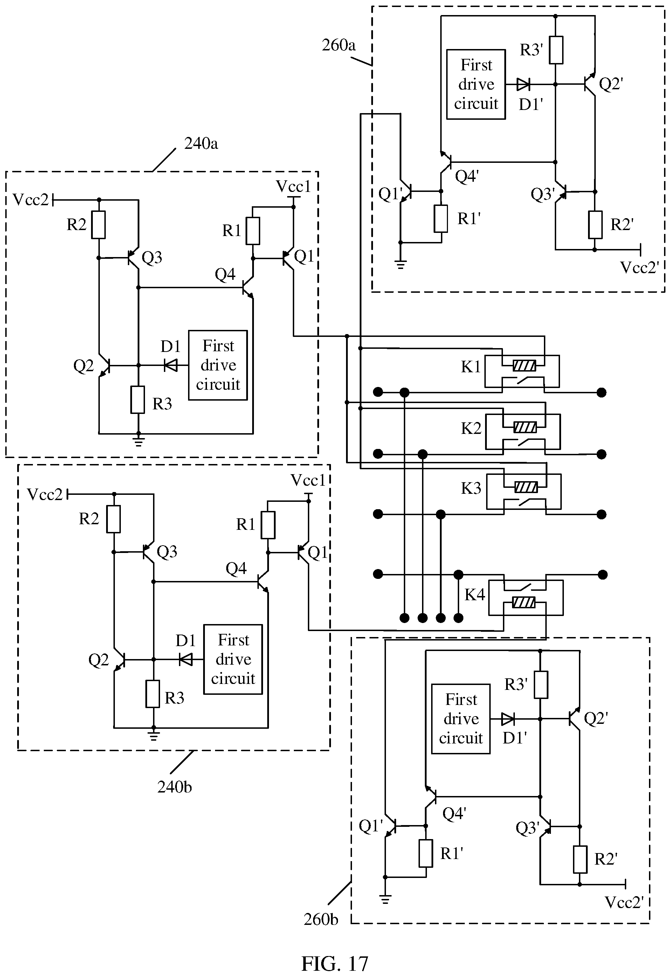

FIG. 17 is a diagram of a backup power box according to an embodiment of this application.

In this embodiment of this application, when the first switching transistor Q1 in the first switch circuit 240a is turned on, and the sixth switching transistor Q1' in the second switch circuit 260a is turned on, a loop passing from the first voltage source Vcc1 through the first switching transistor Q1, a coil of a relay, and the sixth switching transistor Q1' is conducted. Therefore, the relays K1, K2, and K3 on a multiphase live wire are switched on, and electric energy can be transmitted via the multiphase live wire. When the first switching transistor Q1 in the first switch circuit 240b is turned on, and the sixth switching transistor Q1' in the second switch circuit 260d is turned on, a loop passing from the first voltage source Vcc1 through the first switching transistor Q1, a coil of a relay, and the sixth switching transistor Q1' is conducted. Therefore, the relay K4 on a neutral wire is switched on, and the neutral wire is grounded. In this way, an alternating current output by the inverter can be transmitted to the power grid, and reliable on-grid can be implemented.

In this embodiment of this application, when the first switching transistor Q1 in the first switch circuit 240a is turned off, or the sixth switching transistor Q1' in the second switch circuit 260a is turned off, the loop passing from the first voltage source Vcc1 through the first switching transistor Q1, the coil of the relay, and the sixth switching transistor Q1' is disconnected. Therefore, the relays K1, K2, and K3 on the multiphase live wire are switched off, and electric energy cannot be transmitted to the power grid via the multiphase live wire. When the first switching transistor Q1 in the first switch circuit 240b is turned off, or the sixth switching transistor Q1' in the second switch circuit 260b is turned off, the loop passing from the first voltage source Vcc1 through the first switching transistor Q1, the coil of the relay, and the sixth switching transistor Q1' is disconnected. Therefore, the relay K4 on the neutral wire is switched off, and the neutral wire cannot be grounded. In this way, an alternating current output by the inverter cannot be transmitted to the power grid, and reliable off-grid can be implemented.

For a specific turn-on manner of the first switching transistor Q1, refer to related content in the foregoing embodiments. A turn-on manner of the sixth switching transistor Q1' is similar to that of the first switching transistor Q1. Details are not described again.

In embodiments of this application, a distance between normally-open contacts of a relay falls within a preset threshold range, and both a maximum value and a minimum value of the preset threshold range are positively correlated with a voltage value of the alternating current output by the inverter.

A distance between contacts of each relay falls within the preset threshold range. Therefore, when the relay is switched off, because the distance between the normally-open contacts of the relay falls within the preset threshold range, an electrical safety regulation and a corresponding size requirement can be met. In other words, when the relay is in an off state, a distance between a movable contact and a static contact of the relay is large, electrical breakdown is not likely to occur between the contacts, and the relay does not fail. Therefore, the electrical safety regulation can be met. In addition, the distance between the movable contact and the static contact of the relay is not excessively large. Therefore, the corresponding size requirement can be met.

In embodiments of this application, both the maximum value and the minimum value of the preset threshold range are positively correlated with the voltage value of the alternating current output by the inverter, that is, are positively correlated with a voltage value of a system in which the relay is used. For example, a valid value of a system voltage is 220 V, and the maximum value and the minimum value of the preset threshold range may be respectively 10 mm and 15 mm; or a valid value of a system voltage is 690 V, and the maximum value and the minimum value of the preset threshold range may be respectively 20 mm and 25 mm.

In embodiments of this application, because the backup power box includes the relay, on/off-grid switching can be implemented by using the relay. In addition, the distance between the normally-open contacts of the relay falls within the preset threshold range, and both the maximum value and the minimum value of the preset threshold range are positively correlated with the voltage value of the alternating current output by the inverter. To be specific, when the voltage value of the alternating current output by the inverter is large, both the maximum value and the minimum value of the preset threshold range are large; or when the voltage value of the alternating current output by the inverter is small, both the maximum value and the minimum value of the preset threshold range are small. In this way, the electrical safety regulation and the corresponding size requirement in an off-grid mode can be met. In addition, because the backup power box includes only the relay and does not include a contactor, power density of the backup power box can be improved, and costs can be reduced. Because the backup power box in this embodiment of this application does not include the contactor, impact of noise generated by the contactor on the relay can be avoided, and a service life of the relay can be prolonged.

In embodiments of this application, an action sequence of the relay when the backup power box prepares to work and an action sequence of the relay when the backup power box prepares to stop working are separately limited. Specifically, refer to FIG. 3. When the backup power box prepares to work, the first switch circuit 240b preferentially switches on the relay K4 on the ground wire. This is because if the relays K1, K2, and K3 on the live wires are first switched on, a case in which the relays K1, K2, and K3 are switched on but the relay K4 is not switched on may happen, that is, there is a current on the live wires, but the ground wire is not grounded. When an electrical device connected to a live wire is faulty and a metal housing is accidentally energized, because a fault current of the electrical device cannot flow into the ground through the ground wire, personal injury may be caused to a user when the user touches the electrical device. Therefore, in embodiments of this application, the first switch circuit 240b preferentially switches on the relay K4 on the ground wire, to avoid personal injury to the user.

When the backup power box prepares to stop working, the first switch circuit 240a preferentially switches off the relays K1, K2, and K3. This is because if the relay K4 on the ground wire is first switched off, a case in which the relay K4 has been switched off but the relays K1, K2, and K3 are not switched off may happen, that is, there is a current on the live wires, but the ground wire is not grounded. When an electrical device connected to a live wire is faulty and a metal housing is accidentally energized, because a fault current of the electrical device cannot flow into the ground through the ground wire, personal injury may be caused to the user when the user touches the electrical device. Therefore, in embodiments of this application, the first switch circuit 240a preferentially switches off the relays K1, K2, and K3 on the live wires, to avoid personal injury to the user.

In addition, this application further provides a control method for a backup power box. The method includes steps 1810 and 1820.

1810: Control a self-locking circuit to output a control signal, to control a first switching transistor in a first switch circuit to switch to a turn-on state, where the first switch circuit includes the self-locking circuit, a first on-resistor, and a first voltage source, the first switching transistor is connected between the first voltage source and a relay, two ends of the first on-resistor are respectively connected to the first voltage source and an output end of the self-locking circuit, the output end of the self-locking circuit is further connected to the first switching transistor, a backup power port of the backup power box is connected to a wire via a connection point, and the relay is connected between the connection point and a power grid.

1820: Control the self-locking circuit not to output the control signal, to control the first switching transistor to switch to a turn-off state.

In an embodiment, controlling of the self-locking circuit to output the control signal includes: when an on-grid instruction is received, controlling a first drive circuit in the self-locking circuit to generate a single pulse signal to trigger the self-locking circuit to output the control signal.

The first drive circuit is connected to an anode of a diode in the self-locking circuit, a cathode of the diode is connected to a base of a second switching transistor in the self-locking circuit, an emitter of the second switching transistor is connected to an emitter of a fourth switching transistor in the self-locking circuit, a collector of the second switching transistor is connected to a base of a third switching transistor in the self-locking circuit, one end of a self-locking resistor in the self-locking circuit is connected to a connection point between the cathode of the diode and the base of the second switching transistor, and the other end of the self-locking resistor is connected to a connection point between the emitter of the second switching transistor and the emitter of the fourth switching transistor. An emitter of the third switching transistor is connected to a second voltage source, a collector of the third switching transistor is connected to a base of the fourth switching transistor, a collector of the fourth switching transistor is configured to connect to a base of the first switching transistor, one end of a second on-resistor in the self-locking circuit is connected to a connection point between the second voltage source and the emitter of the third switching transistor, and the other end of the second on-resistor is connected to a connection point between the base of the third switching transistor and the collector of the second switching transistor.

In an embodiment, controlling of the self-locking circuit not to output the control signal includes: when an off-grid instruction is received, controlling a second drive circuit in the self-locking circuit to generate a single pulse signal to trigger the self-locking circuit not to output the control signal.

A first drive circuit in the self-locking circuit is connected to an anode of a diode in the self-locking circuit, a cathode of the diode is connected to a base of a second switching transistor in the self-locking circuit, an emitter of the second switching transistor is connected to an emitter of a fourth switching transistor in the self-locking circuit, a collector of the second switching transistor is connected to a base of a third switching transistor in the self-locking circuit, one end of a self-locking resistor in the self-locking circuit is connected to a connection point between the cathode of the diode and the base of the second switching transistor, and the other end of the self-locking resistor is connected to a connection point between the emitter of the second switching transistor and the emitter of the fourth switching transistor. An emitter of the third switching transistor is connected to a second voltage source, a collector of the third switching transistor is connected to a base of the fourth switching transistor, a collector of the fourth switching transistor is configured to connect to a base of the first switching transistor, one end of a second on-resistor in the self-locking circuit is connected to a connection point between the second voltage source and the emitter of the third switching transistor, and the other end of the second on-resistor is connected to a connection point between the base of the third switching transistor and the collector of the second switching transistor. The second drive circuit is connected to a base of a fifth switching transistor in the self-locking circuit, an emitter of the fifth switching transistor is connected to a connection point between the second switching transistor and the fourth switching transistor, and a collector of the fifth switching transistor is connected to a connection point between the second voltage source and the third switching transistor.

For the control method for the backup power box, refer to the foregoing related content. Details are not described again.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A backup power box, wherein the backup power box comprises a plurality of backup power ports, a multiphase wire, a plurality of relays, a first switch circuit, and a controller;
two ends of each phase wire of the multiphase wire are respectively configured to connect to an inverter and a power grid;
each of the plurality of backup power ports is connected to each phase wire via a connection point, and each of the plurality of relays is connected between each connection point and the power grid;
the first switch circuit comprises a first switching transistor, a first voltage source, a first on-resistor, and a self-locking circuit, the first switching transistor is connected between the first voltage source and a coil of one relay of the plurality of relays, two ends of the first on-resistor are respectively connected to the first voltage source and an output end of the self-locking circuit, and the output end of the self-locking circuit is further connected to the first switching transistor;
the controller is configured to control the self-locking circuit to output a control signal, to control the first switching transistor to switch to a turn-on state; and
the self-locking circuit is configured to: when the first switching transistor is in the turn-on state and the controller is incapable of controlling the self-locking circuit to output the control signal, continuously output the control signal to maintain the first switching transistor in the turn-on state.

2. The backup power box according to claim 1, wherein the self-locking circuit comprises a second switching transistor, a third switching transistor, a fourth switching transistor, a second voltage source, a diode, a first drive circuit, a second on-resistor, and a self-locking resistor;
an anode of the diode is connected to the first drive circuit, a cathode of the diode is connected to a base of the second switching transistor, an emitter of the second switching transistor is connected to an emitter of the fourth switching transistor, a collector of the second switching transistor is connected to a base of the third switching transistor, one end of the self-locking resistor is connected to a connection point between the cathode of the diode and the base of the second switching transistor, and the other end of the self-locking resistor is connected to a connection point between the emitter of the second switching transistor and the emitter of the fourth switching transistor; and
an emitter of the third switching transistor is connected to the second voltage source, a collector of the third switching transistor is connected to a base of the fourth switching transistor, a collector of the fourth switching transistor is configured to connect to a base of the first switching transistor, one end of the second on-resistor is connected to a connection point between the second voltage source and the emitter of the third switching transistor, and the other end of the second on-resistor is connected to a connection point between the base of the third switching transistor and the collector of the second switching transistor.

3. The backup power box according to claim 1, wherein the self-locking circuit comprises a second switching transistor, a third switching transistor, a fourth switching transistor, a second voltage source, a diode, a first drive circuit, a second on-resistor, and a self-locking resistor;
the first drive circuit is connected to a gate of the second switching transistor via the diode, a source of the second switching transistor is connected to a source of the fourth switching transistor, a drain of the second switching transistor is connected to a gate of the third switching transistor, one end of the self-locking resistor is connected to a connection point between a cathode of the diode and the gate of the second switching transistor, and the other end of the self-locking resistor is connected to a connection point between the source of the second switching transistor and the source of the fourth switching transistor; and
a source of the third switching transistor is connected to the second voltage source, a drain of the third switching transistor is connected to a gate of the fourth switching transistor, a drain of the fourth switching transistor is configured to connect to a gate of the first switching transistor, one end of the second on-resistor is connected to a connection point between the second voltage source and the source of the third switching transistor, and the other end of the second on-resistor is connected to a connection point between the gate of the third switching transistor and the drain of the second switching transistor.

4. The backup power box according to claim 1, wherein the self-locking circuit comprises a second switching transistor, a third switching transistor, a fourth switching transistor, a second voltage source, a diode, a first drive circuit, a second on-resistor, and a self-locking resistor;
the first drive circuit is connected to a gate of the second switching transistor via the diode, an emitter of the second switching transistor is connected to an emitter of the fourth switching transistor, a collector of the second switching transistor is connected to a gate of the third switching transistor, one end of the self-locking resistor is connected to a connection point between a cathode of the diode and the gate of the second switching transistor, and the other end of the self-locking resistor is connected to a connection point between the emitter of the second switching transistor and the emitter of the fourth switching transistor; and
an emitter of the third switching transistor is connected to the second voltage source, a collector of the third switching transistor is connected to a gate of the fourth switching transistor, a collector of the fourth switching transistor is configured to connect to a gate of the first switching transistor, one end of the second on-resistor is connected to a connection point between the second voltage source and the emitter of the third switching transistor, and the other end of the second on-resistor is connected to a connection point between the gate of the third switching transistor and the collector of the second switching transistor.

5. The backup power box according to any one of claims 2 to 4, wherein when the controller receives an on-grid instruction, the controller is configured to control the first drive circuit to generate a single pulse signal to trigger the self-locking circuit to output the control signal, to switch the first switching transistor to be in the turn-on state.

6. The backup power box according to claim 2 or 5, wherein the self-locking circuit further comprises a fifth switching transistor and a second drive circuit;
the second drive circuit is connected to a base of the fifth switching transistor, an emitter of the fifth switching transistor is connected to a connection point between the second switching transistor and the fourth switching transistor, and a collector of the fifth switching transistor is connected to a connection point between the second voltage source and the third switching transistor;
the controller is configured to control the self-locking circuit not to output the control signal, to control the first switching transistor to switch to a turn-off state; and
the self-locking circuit is configured to: when the first switching transistor is in the turn-off state and the controller is incapable of controlling the self-locking circuit not to output the control signal, continuously skip outputting the control signal to maintain the turn-off state of the first switching transistor.

7. The backup power box according to claim 6, wherein when the controller receives an off-grid instruction, the controller is configured to control the second drive circuit to generate a single pulse signal to trigger the self-locking circuit not to output the control signal, to switch the first switching transistor to the turn-off state.

8. The backup power box according to any one of claims 1 to 7, wherein the backup power box further comprises a second switch circuit, and the first switch circuit, the second switch circuit, and the one relay are connected in series between the first voltage source and a reference ground.

9. The backup power box according to claim 8, wherein the second switch circuit comprises a sixth switching transistor, a third on-resistor, and a self-locking circuit; and
the first switching transistor is connected between the first voltage source and one end of the coil of the relay, the other end of the coil of the relay is connected to a collector of the sixth switching transistor, an emitter of the sixth switching transistor is connected to the reference ground, two ends of the third on-resistor are respectively connected to an output end of the self-locking circuit in the second switch circuit and the reference ground, and the output end of the self-locking circuit in the second switch circuit is further connected to a base of the sixth switching transistor.

10. The backup power box according to claim 8, wherein the second switch circuit comprises a sixth switching transistor, a third on-resistor, and a self-locking circuit; and
the first switching transistor is connected between the first voltage source and a collector of the sixth switching transistor, an emitter of the sixth switching transistor is connected to one end of the coil of the relay, the other end of the coil of the relay is connected to the reference ground, two ends of the third on-resistor are respectively connected to an output end of the self-locking circuit in the second switch circuit and the emitter of the sixth switching transistor, and the output end of the self-locking circuit in the second switch circuit is further connected to a base of the sixth switching transistor.

11. The backup power box according to any one of claim 2, or claims 6 and 7, wherein a current-limiting resistor is further connected in series between the collector of the second switching transistor and a connection point between the second on-resistor and the base of the third switching transistor, and
wherein a voltage divider resistor is further connected in series between the self-locking resistor and a connection point between the third switching transistor and the fourth switching transistor, and one end of the voltage divider resistor is connected to a connection point between the base of the second switching transistor and the diode, and
wherein a current-limiting resistor is further connected in series between the base of the fourth switching transistor and a connection point between the collector of the third switching transistor and the self-locking resistor, and
wherein a discharge resistor is further connected between the base of the fourth switching transistor and the emitter of the fourth switching transistor.

12. The backup power box according to claim 6 or 7, wherein a current-limiting resistor is further connected in series between the second drive circuit and the base of the fifth switching transistor, and
wherein a discharge resistor is further connected between the base of the fifth switching transistor and the emitter of the fifth switching transistor, and
wherein a current-limiting resistor is further connected in series between the second voltage source and a connection point between the fifth switching transistor and the third switching transistor.

13. A control method for a backup power box, comprising:
controlling a self-locking circuit to output a control signal, to control a first switching transistor in a first switch circuit to switch to a turn-on state, wherein the first switch circuit comprises the self-locking circuit, a first on-resistor, and a first voltage source, the first switching transistor is connected between the first voltage source and a coil of a relay, two ends of the first on-resistor are respectively connected to the first voltage source and an output end of the self-locking circuit, the output end of the self-locking circuit is further connected to the first switching transistor, a backup power port of the backup power box is connected to a wire via a connection point, and the relay is connected between the connection point and a power grid; or
controlling the self-locking circuit not to output the control signal, to control the first switching transistor to switch to a turn-off state.

14. The control method for the backup power box according to claim 13, wherein the controlling a self-locking circuit to output a control signal comprises: when an on-grid instruction is received, controlling a first drive circuit in the self-locking circuit to generate a single pulse signal to trigger the self-locking circuit to output the control signal, wherein the first drive circuit is connected to an anode of a diode in the self-locking circuit, a cathode of the diode is connected to a base of a second switching transistor in the self-locking circuit, an emitter of the second switching transistor is connected to an emitter of a fourth switching transistor in the self-locking circuit, a collector of the second switching transistor is connected to a base of a third switching transistor in the self-locking circuit, one end of a self-locking resistor in the self-locking circuit is connected to a connection point between the cathode of the diode and the base of the second switching transistor, the other end of the self-locking resistor is connected to a connection point between the emitter of the second switching transistor and the emitter of the fourth switching transistor, an emitter of the third switching transistor is connected to a second voltage source, a collector of the third switching transistor is connected to a base of the fourth switching transistor, a collector of the fourth switching transistor is configured to connect to a base of the first switching transistor, one end of a second on-resistor in the self-locking circuit is connected to a connection point between the second voltage source and the emitter of the third switching transistor, and the other end of the second on-resistor is connected to a connection point between the base of the third switching transistor and the collector of the second switching transistor.

15. The control method for the backup power box according to claim 13, wherein the controlling the self-locking circuit not to output the control signal comprises:
when an off-grid instruction is received, controlling a second drive circuit in the self-locking circuit to generate a single pulse signal to trigger the self-locking circuit not to output the control signal, wherein a first drive circuit in the self-locking circuit is connected to an anode of a diode in the self-locking circuit, a cathode of the diode is connected to a base of a second switching transistor in the self-locking circuit, an emitter of the second switching transistor is connected to an emitter of a fourth switching transistor in the self-locking circuit, a collector of the second switching transistor is connected to a base of a third switching transistor in the self-locking circuit, one end of a self-locking resistor in the self-locking circuit is connected to a connection point between the cathode of the diode and the base of the second switching transistor, the other end of the self-locking resistor is connected to a connection point between the emitter of the second switching transistor and the emitter of the fourth switching transistor, an emitter of the third switching transistor is connected to a second voltage source, a collector of the third switching transistor is connected to a base of the fourth switching transistor, a collector of the fourth switching transistor is configured to connect to a base of the first switching transistor, one end of a second on-resistor in the self-locking circuit is connected to a connection point between the second voltage source and the emitter of the third switching transistor, the other end of the second on-resistor is connected to a connection point between the base of the third switching transistor and the collector of the second switching transistor, the second drive circuit is connected to a base of a fifth switching transistor in the self-locking circuit, an emitter of the fifth switching transistor is connected to a connection point between the second switching transistor and the fourth switching transistor, and a collector of the fifth switching transistor is connected to a connection point between the second voltage source and the third switching transistor.
